# EUROPÄISCHE PATENTSCHRIFT

(11) **EP 1 002 219 B1**
(45) Veröffentlichungstag und Bekanntmachung des Hinweises auf die Patenterteilung: **04.12.2002**
(21) Anmeldenummer: 98945093.7
(22) Anmeldetag: 24.07.1998
(51) Int. Cl.: G01D 5/36, G01D 5/245

(54) **OPTISCHE POSITIONSMESSEINRICHTUNG**
OPTICAL POSITION MEASURING DEVICE
DISPOSITIF OPTIQUE DE MESURE DE POSITION

(30) Priorität: 07.08.1997 DE 19734136
(43) Veröffentlichungstag der Anmeldung: 24.05.2000
(73) Patentinhaber: Dr. Johannes Heidenhain GmbH, 83292 Traunreut (DE)
(72) Erfinder: HOLZAPFEL, Wolfgang, D-83119 Obing (DE); MAYER, Elmar, D-83342 Tacherting (DE)
(86) Internationale Anmeldenummer: EP9804658
(87) Internationale Veröffentlichungsnummer: WO99008074

(56) Entgegenhaltungen:
- GB-A- 2 288 015
- US-A- 5 241 172

## Beschreibung

Die vorliegende Erfindung betrifft eine optische Positionsmeßeinrichtung nach dem Oberbegriff des Anpruches 1.

Bekannte optische Positionsmeßeinrichtungen, wie sie beispielsweise in Werkzeugmaschinen zur Erfassung der Relativposition von Werkstück und Werkzeug eingesetzt werden, liefern in der Regel neben Inkrementalsignalen bezüglich des Relativversatzes auch sogenannte Referenzimpulssignale. Über die Referenzimpulssignale kann bei einer oder mehreren definierten Relativpositionen der zueinander beweglichen Teile ein exakter Absolutbezug der Positionsmessung hergestellt werden. Zur Erzeugung der Referenzimpulssignale sind hierbei auf Seiten des Maßstabes der jeweiligen Positionsmeßeinrichtung an ein oder mehreren Positionen Referenzmarkierungsfelder angeordnet. Die Abtasteinheit einer derartigen Positionsmeßeinrichtung bietet die Möglichkeit bei der zu detektierenden Relativposition von Maßstab und Abtasteinheit ein entsprechendes Referenzimpulssignal zu erzeugen, das in der nachgeordneten Auswerteeinrichtung geeignet verarbeitet wird.

Es existieren bezüglich der Anordnung von Referenzmarkierungsfeldern auf dem Maßstab nunmehr verschiedene Möglichkeiten.
So ist beispielsweise aus der US 4,263,506 bekannt, die Referenzmarkierungsfelder auf dem Maßstab seitlich benachbart zur Inkrementalteilungsspur anzuordnen. Problematisch ist bei einer derartigen Anordnung jedoch, daß im Fall einer eventuellen Verdrehung von Maßstab und Abtasteinheit um eine Achse senkrecht zur Maßstab- oder Abtastebene die exakte, lagerichtige Zuordnung des Referenzimpulssignales zu einer definierten Periode der Inkrementalsignale nicht mehr gewährleistet ist.
Daneben ist es auch möglich, ein oder mehrere Referenzmarkierungsfelder unmittelbar in die Inkrementalteilungsspur zu integrieren, wie dies beispielsweise in der US 3,985,448 vorgeschlagen wird. Die oben erwähnten Nachteile, die insbesondere bei der Verdrehung von Maßstab und Abtasteinheit resultieren, lassen sich im Fall einer Anordnung der Referenzmarkierungsfelder in der Inkrementalteilungsspur vermeiden. Die optische Abtastung einer Inkrementalteilungsspur, in die auch ein Referenzmarkierungsfeld integriert ist, erfolgt in der genannten Druckschrift über eine Abtasteinheit, die zum einen eine geeignet ausgebildete Abtastplatte mit entsprechenden Abtastteilungen sowie zum anderen eine entsprechende Detektoranordnung aufweist. Problematisch bei der Abtastung einer solchermaßen ausgestalteten Inkrementalteilungsspur mit mindestens einem integriertem Referenzmarkierungsfeld ist nunmehr u.a., daß im Bereich des Referenzmarkierungsfeldes lediglich ein stark beeinträchtigtes Inkrementalsignal zur Verfügung steht.
Soll dieses Problem umgangen werden, so wäre ein Referenzmarkierungsfeld auf dem Maßstab erforderlich, das in Meßrichtung eine große Ausdehnung aufweisen muß. Dies wiederum bedingt eine voluminöse Abtasteinheit.

Neben der Erzeugung der Inkrementalsignale mit einer Abtasteinheit, welche außer den entsprechenden Detektorelementen auch eine Abtastplatte enthält, sind desweiteren Abtasteinheiten bekannt, die eine sogenannte strukturierte Detektoranordnung aufweisen. Hierbei sind abtastseitig auf einem Halbleitersubstrat in Meßrichtung benachbart angeordnete aktive Detektorbereiche vorgesehen, die jeweils bestimmte Signalanteile der Abtastsignale liefern. Bei derartigen Abtasteinheiten übernimmt demzufolge ein einzelnes Bauelement die kombinierte Funktion von Abtastteilung und Detektorelement. Diesbezüglich sei beispielsweise die EP 518 620 A1 genannt. Wie nunmehr mit einer derartigen Detektoranordnung die Abtastung eines Referenzmarkierungsfeldes erfolgen kann, das unmittelbar in die Inkrementalteilungsspur integriert ist und bei dem die oben erwähnten Probleme bezüglich des reduzierten Inkrementalsignalanteiles im Bereich der Referenzmarkierungsfelder stark reduziert werden, ist in der genannten Druckschrift nicht offenbart.

Aus der DE 195 12 258 ist eine strukturierte Detektoranordnung bekannnt, die zur Erzeugung eines Referenzimpulssignales dient. Es ist jedoch wiederum die Anordnung der Referenzmarkierungen seitlich benachbart zur Inkrementalteilung vorgesehen. Es ergeben sich demzufolge erneut die erwähnten Probleme beim Verdrehen von Maßstab und Abtasteinheit um eine Achse, die senkrecht zur Maßstab- oder Abtastebene orientiert ist. Zur Abtastung einer Referenzmarkierung, die unmittelbar in die Inkrementalteilungsspur integriert wird, ist die in dieser Druckschrift vorgeschlagene Ausbildung der Detektoranordnung nicht geeignet.

Eine gattungsgemäße optische Positionsmeßeinrichtung ist ferner aus der US 5,241,172 bekannt. Dort ist ein Drehgeber offenbart, der eine kreisförmige Inkrementalteilung aufweist, wobei in einem Index-Fenster-Bereich ein lichtundurchlässiger Steg ausgelassen wird, so daß derart ein Referenzmarkierungsfeld gebildet wird, das in die Inkrementalteilungsspur integriert ist. Die optische Abtastung erfolgt mit Hilfe dreier Detektorelemente. Deren Ausgangssignale werden derart aufbereitet, daß ein einziges Ausgangssignal resultiert, das im Bereich der periodischen Inkrementalteilung alternierend HIGH und LOW ist. Im Bereich des Referenzmarkierungsfeldes ist dieses Signal hingegen über den gesamten Bereich auf dem Pegel LOW. Eine derartige optische Positionsmeßeinrichtung weist nunmehr jedoch eine Reihe gravierender Nachteile auf. So steht im Bereich des Referenzmarkierungsfeldes kein Inkrementalsignal zur Verfügung, der Signalpegel ist in diesem Bereich vielmehr stets auf LOW. Desweiteren ist bei der vorgeschlagenen Meßeinrichtung aufgrund der gelieferten Signalform nicht zu unterscheiden, ob gerade ein logischer LOW-Pegel des Inkrementalbereiches der abgetatsten Teilungsspur vorliegt oder aber gerade der logische LOW-Pegel des Referenzmarkierungsbereiches vorliegt. Um demzufolge überhaupt den Referenzmarkierungsbereich zu identifizieren, muß demnach noch zusätzlich die Zeit zwischen den Rechteckpulsen erfaßt werden.

Aufgabe der vorliegenden Erfindung ist es daher, eine optische Positionsmeßeinrichtung mit einer kompakt bauenden Abtasteinheit anzugeben, die bei der Abtastung eines Maßstabes neben Inkrementalsignalen auch ein Referenzimpulssignal an mindestens einer definierten Position liefert. Fehlereinflüsse auf die Erzeugung des Referenzimpulssignales, resultierend aus der oben erwähnten Verdrehung von Maßstab und Abtasteinheit sollen dabei ebenso minimiert werden wie die Anfälligkeit gegenüber einer möglichen Verschmutzung des Maßstabes. Desweiteren ist bei der Erzeugung des Referenzimpulssignales eine möglichst geringe, störende Beeinflußung des Inkrementalsignales wünschenswert. Schließlich soll desweiteren die Phasenlage des Referenzimpulssignales auch bei einer eventuellen Verkippung des Maßstabes um eine Achse in der Maßstabebene in Bezug auf die Inkrementalsignale erhalten bleiben.

Diese Aufgabe wird gelöst durch eine Positionsmeßeinrichtung mit den Merkmalen im kennzeichnenden Teil des Anspruches 1.

Vorteilhafte Ausführungsformen der erfindungsgemäßen Positionsmeßeinrichtung ergeben sich aus den Maßnahmen, die in den abhängigen Ansprüchen aufgeführt sind.

Die erfindungsgemäße Ausgestaltung der Detektoranordnung in der Abtasteinheit gewährleistet nunmehr die erwünschte Unempfindlichkeit bei einer eventuellen Verdrehung von Maßstab und Abtasteinheit um eine Achse senkrecht zur Meßebene. Die Lage des erzeugten Referenzimpulssignales ändert sich in Bezug auf die Inkrementalsignale auch in einem derartigen Fall nicht.

Desweiteren ist sichergestellt, daß auch im Bereich des Referenzmarkierungsfeldes Signalanteile aus der Detektoranordnung zur Erzeugung mindestens eines Inkrementalsignales zur Verfügung stehen. Zudem wird das Inkrementalsignal nur gering beeinflußt. Auf diese Art und Weise ist eine entsprechende Präzision bei der Positionsbestimmung gewährleistet.

In einer vorteilhaften Ausführungsform der vorliegenden Erfindung ist aufgrund der erfindungsgemäßen Ausbildung der Detektoranordnung eine äußerst kompakt bauende Abtasteinheit realisierbar.

In der vorgenannten Ausführungsform der Abtasteinheit kann desweiteren eine sogenannte Einfeldabtastung sichergestellt werden. Dies bedeutet, daß sämtliche phasenverschobenen Signalanteile, welche zur Erzeugung der verschiedenen optischen Abtastsignale beitragen, aus einer Teilungsperiode der Maßstabteilung stammen. Derart ist eine erhöhte Unempfindlichkeit gegenüber Verschmutzungen, beispielsweise auf dem Maßstab, gewährleistet. Die Qualität der verschiedenen Abtastsignale wird hierbei jeweils gleichmäßig von eventuellen Verschmutzungen beeinflußt.

Daneben ist es jedoch selbstverständlich möglich, neben der erwähnten Einfeldabtastungs-Anordnung auch alternative Abtastanordnungen erfindungsgemäß auszugestalten, beispielsweise sog. Quasi-Einfeldabtastungen, bei denen alle phasenverschobenen Signalanteile aus wenigen Teilungsperioden innerhalb des abgetasteten Maßstabbereiches stammen oder aber sog. Vernier-Abtastanordnungen mit unterschiedlichen Teilungsperioden der vorgesehenen Strukturen auf Maßstab- und Abtastseite etc..

Als weiterer Vorteil der erfindungsgemäßen Lösung ist anzuführen, daß nunmehr auch bei einer eventuellen Verkippung des Maßstabes in der Maßstabebene die Phasenlage zwischen dem erzeugten Referenzimpulssignal und den Inkrementalsignalen erhalten bleibt. Dies ist darauf zurückzuführen, daß sowohl die Inkrementalsignale als auch das Referenzimpulssignal aus einer Abtaststelle auf dem Maßstab resultieren.

Ferner resultiert aufgrund der möglichen Eliminierung des periodischen Inkrementalsignalanteiles am Referenzimpulssignal eine erhöhte Detektionssicherheit für dieses Signal. Hierzu werden nachfolgend verschiedenste Möglichkeiten angegeben.
Die erfindungsgemäßen Maßnahmen lassen sich desweiteren in verschiedenartigsten optischen Positionsmeßeinrichtungen realisieren. Hierzu zählen sowohl Systeme, die eine Kollimationsoptik im Beleuchtungsstrahlengang vorsehen als auch Positionsmeßeinrichtungen mit sog. divergenter Beleuchtung, d.h. Systeme, bei denen im Beleuchtungsstrahlengang keine Kollimationsoptik vorgesehen ist etc..

Darüberhinaus können selbstverständlich sowohl lineare oder rotatorische Positionsmeßeinrichtungen ebenso erfindungsgemäß ausgestaltet werden wie Systeme, die im Auflicht oder im Durchlicht betrieben werden.

Weitere Vorteile sowie Einzelheiten der erfindungsgemäßen Positionsmeßeinrichtung ergeben sich aus nachfolgenden Beschreibung mehrerer Ausführungsbeispiele anhand der beiliegenden Zeichnungen.

Dabei zeigt
- Figur 1: eine schematische Darstellung einer erfindungsgemäßen optischen Positionsmeßeinrichtung mit einem Maßstab, der von einer Abtasteinheit abgetastet wird;
- Figur 2a: eine schematische Darstellung eines ersten Ausführungsbeispieles einer erfindungsgemäßen Positionsmeßeinrichtung in Verbindung mit einem damit optisch abgetasteten Maßstab, wobei eine kollimierte Beleuchtung des Maßstabes erfolgt;
- Figur 2b: eine Darstellung der phasenverschobenen Inkrementalsignale als auch des Referenzimpulssignales, das über eine Abtasteinheit gemäß Figur 2a erzeugbar ist;
- Figur 3a: eine Darstellung einer zweiten Ausführungsform der Abtasteinheit einer erfindungsgemäßen Positionsmeßeinrichtung in Verbindung mit einem damit abgetasteten Maßstab;
- Figur 3b: eine Darstellung der phasenverschobenen Inkrementalsignale als auch des Referenzimpulssignales, das über eine Abtasteinheit gemäß Figur 3a erzeugbar ist;
- Figur 4a: eine Darstellung der Abtasteinheit einer dritten Ausführungsform der erfindungsgemäßen Positionsmeßeinrichtung in Verbindung mit einem damit abgetasteten Maßstab;
- Figur 4b, 4c: jeweils eine Darstellung von Referenzimpulssignalanteilen, die in der Abtasteinheit nach Figur 4a erzeugt werden;
- Figur 4d: eine Darstellung des resultierenden Referenzimpulssignales, das mit der Abtasteinheit nach Figur 4a erzeugt wird sowie eine zugehörige Triggerschwelle;
- Figur 5: eine Darstellung der Abtasteinheit einer vierten Ausführungsform der erfindungsgemäßen Positionsmeßeinrichtung in Verbindung mit einem damit abgetasteten Maßstab;
- Figur 6: eine Darstellung der Abtasteinheit einer fünften Ausführungsform der erfindungsgemäßen Positionsmeßeinrichtung;
- Figur 7a-7d: jeweils eine schematische Darstellung zur Erläuterung weiterer Ausführungsmöglichkeiten von Abtasteinheiten erfindungsgemäßer Positionsmeßeinrichtungen.

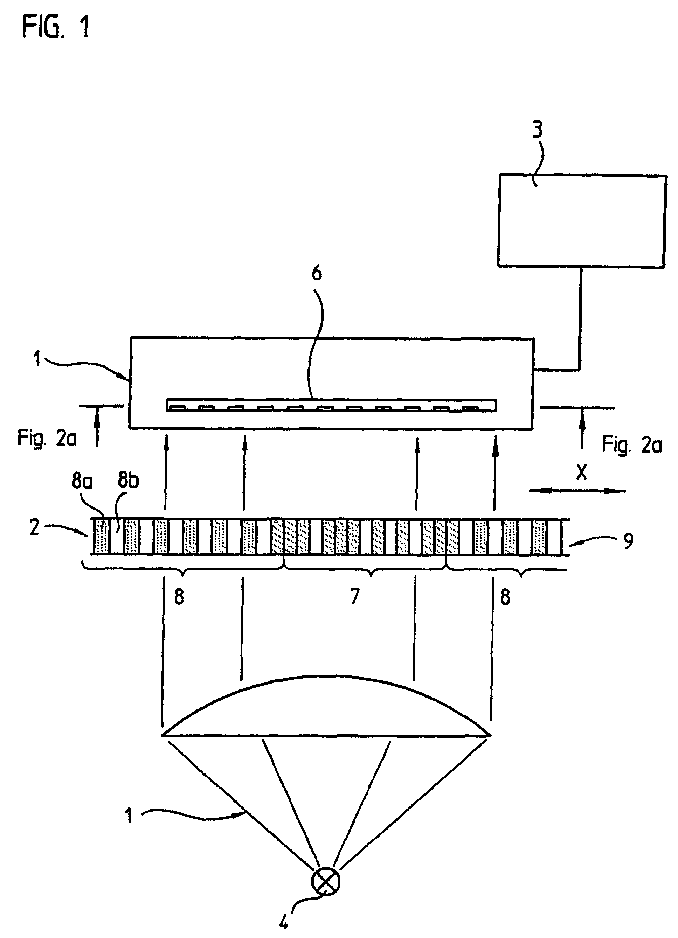

In der Darstellung von Figur 1 ist eine erfindungsgemäße optische Positionsmeßeinrichtung gezeigt, welche eine Abtasteinheit 1 umfaßt. Neben der Abtasteinheit 1 gehört ein relativ zur Abtasteinheit 1 in Meßrichtung x beweglicher Maßstab 2 zur Positionsmeßeinrichtung. Die von der Abtasteinheit 1 bei der Relatiwerschiebung gegenüber dem Maßstab 2 erzeugten Abtastsignale werden der angedeuteten Auswerteeinrichtung 3 zugeführt, die diese Signale in bekannter Art und Weise weiterverarbeitet. Als Abtastsignale werden sowohl mindestens ein Inkrementalsignal als auch mindestens ein Referenzimpulssignal erzeugt. In einer möglichen Anwendung der Positionsmeßeinrichtung wird hiermit etwa die Relativposition von Werkzeug und Werkstück in einer numerisch gesteuerten Werkzeugmaschine bestimmt. Als Auswerteeinrichtung 3 dient hierbei demzufolge eine bekannte numerische Werkzeugmaschinensteuerung, welcher die positionsabhängigen Abtastsignale der Positionsmeßeinrichtung zugeführt werden.

Im Ausführungsbeispiel der Figur 1 ist eine optische Positionsmeßeinrichtung gezeigt, die im Durchlicht arbeitet, was jedoch nicht erfindungswesentlich ist. Ebenso könnte selbstverständlich auch eine im Auflicht arbeitende optische Positionsmeßeinrichtung erfindungsgemäß ausgebildet werden.
Die Abtasteinheit 1 umfaßt in der dargestellten Durchlicht-Varlante zum einen einen sendeseitigen Teil, der u.a. eine Lichtquelle 4 inclusive einer der Lichtquelle 4 vorgeordneten Kollimatoroptik 5 aufweist. Zum anderen ist im detektorseitigen Teil der Abtasteinheit 1 eine Detektoranordnung 6 mit verschiedenen Detektorbereichen vorgesehen, deren Aufbau nachfolgend noch detailliert anhand der anderen Figuren erläutert wird. Wie bereits angedeutet sind sende- und detektorseitiger Teil der Abtasteinheit 1 relativ gegenüber dem Maßstab 2 in Meßrichtung x beweglich.
Auf dem Maßstab 2 ist in der gezeigten Ausführungsform eine sich in Meßrichtung x erstreckende Inkrementalteilung 8 in einer Inkrementalteilungsspur 9 angeordnet, deren optische Abtastung bei der Relativbewegung in bekannter Art und Weise Inkrementalsignale liefert, vorzugsweise ein Paar von Inkrementalsignalen mit einem Phasenversatz von 90°. Der Maßstab 2 weist hierzu in der Spur 9 mit der Inkrementalteilung 8 alternierend angeordnete Inkrementalteilungs-Teilbereiche 8a, 8b mit unterschiedlichen optischen Eigenschaften auf; im Fall der Durchlicht-Ausführung handelt es sich etwa um Inkrementalteilungs-Teilbereiche 8a, 8b, die für die verwendete Lichtwellenlänge nicht-durchlässig und durchlässig ausgebildet sind. Im alternativen Fall einer Auflicht-Anordnung wäre etwa eine Anordnung von Inkrementalteilungs-Teilbereichen 8a, 8b vorzusehen, die reflektierend und nicht-reflektierend für die darauf auftreffenden Strahlenbündel wirken usw..

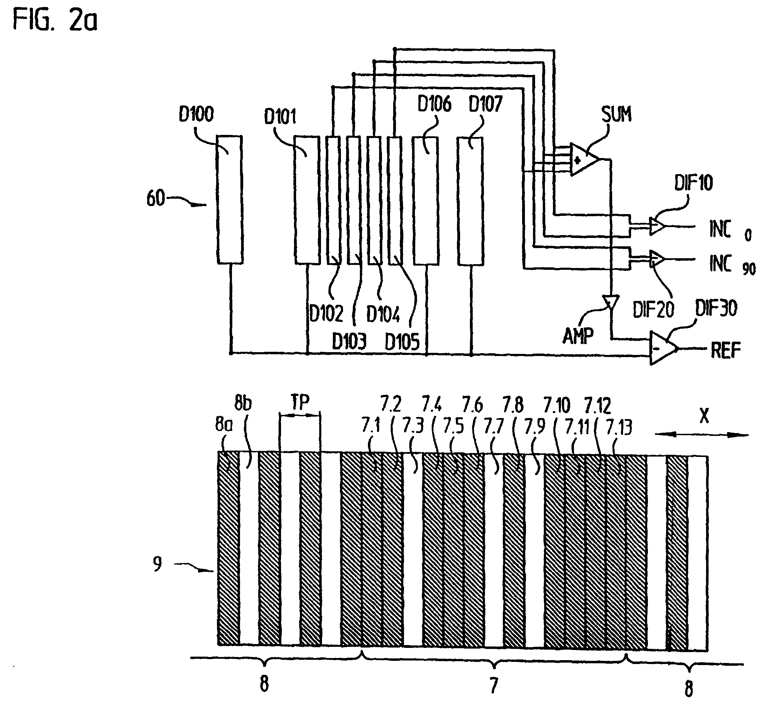

Im gezeigten Ausschnitt des Maßstabes 2 ist desweiteren ein Referenzmarkierungsfeld 7 erkennbar, das integriert in der Inkrementalteilungsspur 9 des Maßstabes 2 angeordnet ist und zur Herstellung eines eindeutigen Absolutbezuges bei einer bestimmten Relativposition von Maßstab 2 und Abtasteinheit 1 dient. Eine vergrößerte Darstellung des Referenzmarkierungsfeldes 7 ist im unteren Teil der Figur 2a gezeigt. Im Referenzmarkierungsfeld 7 liegt dabei eine Anordnung von Referenzmarkierungs-Teilbereichen 7.1 - 7.13 in Meßrichtung x vor, die von der streng periodischen bzw. äqudistanten Anordnung der Inkrementalteilungs-Teilbereiche 8a, 8b im Rest der Inkrementalteilungsspur 9 des Maßstabes 2 abweicht.
So wurde im gezeigten Ausführungsbeispiel gemäß Figur 2a eine Anordnung von insgesamt 13 durchlässigen und nicht-durchlässigen Referenzmarkierungs-Teilbereichen 7.1 - 7.13 im Referenzmarkierungsfeld 7 gewählt, wobei zur eindeutigen Unterscheidung des Referenzmarkierungsfeldes 7 von der Inkrementalteilung 8 mit streng periodisch abwechselnd durchlässigen und undurchlässigen Inkrementalteilungs-Teilbereichen 8a, 8b nunmehr bestimmte Referenzmarkierungs-Teilbereiche undurchlässig ausgestaltet werden. Auf diese Art und Weise resultiert letztlich eine aperiodische Anordnung von Referenzmarklerungs-Teilbereichen 7.1 - 7.13 mit unterschiedlichen optischen Eigenschaften. Im gezeigten Ausführungsbeispiel werden zu diesem Zweck die vier Referenzmarkierungs-Teilbereiche 7.1, 7.5, 7.11 und 7.13, die an Stellen liegen, an denen eigentlich ein durchlässiger - Teilbereich zur Inkrementalsignal-Erzeugung angeordnet würde, undurchlässig ausgebildet.

Selbstverständlich können in die Inkrementalteilungsspur 9 des Maßstabes 1 auch mehrere Referenzmarkierungsfelder 7 an definierten Positionen integriert werden. Hierbei kann es sich sowohl um sogenannte abstandscodiert angeordnete Referenzmarkierungsfelder handeln wie auch um äquidistant angeordnete Referenzmarkierungsfelder etc.. Daneben ist jederzeit möglich, auch mehrere Inkrementalteilungsspuren ggf. mit unterschiedlichen Teilungsperioden parallel benachbart auf dem Maßstab anzuordnen und in diese Spuren jeweils ein oder mehrere Referenzmarkierungsfelder zu integrieren usw..

Eine Abtasteinheit 1 einer ersten Ausführungsform der erfindungsgemäßen Positionsmeßeinrichtung sei nunmehr nachfolgend anhand der Figur 2a erläutert. Diese zeigt im oberen Teil eine Ansicht der Detektorebene der Detektoranordnung 6 aus Figur 1 in Verbindung mit verschiedenen Signalverarbeitungsbausteinen. Darunter ist in vergrößerter Form die Inkrementalteilungsspur 9 des Maßstabes 1 mit dem Referenzmarkierungsfeld 7 und der links und rechts daran angrenzenden Inkrementalteilung 8 dargestellt.
Zur Detektion der vom Maßstab 2 kommenden Strahlenbündel sind in diesem Ausführungsbeispiel der Abtasteinheit detektorseitig mehrere strahlungsempfindliche Detektorbereiche D100 -D107 vorgesehen, die jeweils rechteckförmig ausgebildet und in Meßrichtung x mit ihren Längsseiten benachbart zueinander angeordnet sind. Die verschiedenen Detektorbereiche D100 - D107 liefern im Fall der Relativbewegung von Maßstab und Abtasteinheit jeweils Signalanteile, die in der nachfolgend beschriebenen Weise zur Erzeugung phasenversetzter Inkrementalsignale INC₀, INC₉₀ sowie zur Erzeugung eines Referenzimpulssignales REF herangezogen werden.
Die jeweils äußeren bzw. begrenzenden Detektorbereiche D100, D101 sowie D106 und D107 der Detektoranordnung 60 dienen hierbei zur Erzeugung des Referenzimpulssignales REF; nachfolgend seien diese Detektorbereiche deshalb als Referenzimpulssignal-Detektorbereiche D100, D101, D106, D107 bezeichnet. Die zwischen den Referenzimpulssignal-Detektorbereichen D100, D101, D106, D107 liegenden Detektorbereiche D102, D103, D104 und D105 der Detektoranordnung 60 dienen hingegen zur Erzeugung des mindestens einen Inkrementalsignales während der Relativbewegung von Maßstab und Abtasteinheit; vorzugsweise werden jedoch zwei um 90° phasenversetzte Inkrementalsignale INC₀, INC₉₀ erzeugt wie im dargestellten Ausführungsbeispiel. Diese Detektorbereiche seien nachfolgend als Inkrementalsignal-Detektorbereiche D102 - D105 bezeichnet. Die Relativanordnung der in diesem Ausführungsbeispiel vorgesehenen vier Inkrementalsignal-Detektorbereiche D102 - D105 ist hierbei so vorgesehen, daß der Inkrementalsignal -Detektorbereich D102 ein Teil-Inkrementalsignal mit der Phasenlage 0°, D103 ein Teil-Inkrementalsignal mit der Phasenlage 180°, D104 ein Teil-Inkrementalsignal mit der Phasenlage 90° und D105 ein Teil-Inkrementalsignal mit der Phasenlage 270° liefert.

Ergänzend sei an dieser Stelle darauf hingewiesen, daß selbstverständlich auch eine andere Relativanordnung der verschiedenen Detektorbereiche im Rahmen der vorliegenden Erfindung gewählt werden kann. Benachbarte Detektorbereiche liefern dann Signale mit anderen relativen Phasenlagen als im obigen Beispiel. Denkbar wäre etwa auch eine Anordnung der Detektorbereiche dergestalt, daß diese Signale mit den Phasenlagen 0°, 120°, 240°... liefern usw..

Die Relativ-Anordnung der Referenzimpulssignal-Detektorbereiche D100, D101, D106, D107 innerhalb der Detektoranordnung 60 erfolgt erfindungsgemäß in Abhängigkeit der gewählten Strukturierung des Referenzmarkierungsfeldes 7 auf dem Maßstab. So wurde im Ausführungsbeispiel der Figur 2a auf Seiten des Maßstabes eine Ausbildung des Referenzmarkierungsfeldes 7 derart gewählt, daß abweichend von der periodischen Anordnung durchlässiger und undurchlässiger Teilbereiche 7.1 - 7.13 in der Inkrementalteilung 8 einzelne Referenzmarkierungs-Teilbereiche 7.1, 7.5, 7.11 und 7.13 undurchlässig ausgebildet wurden. Entsprechend diesen vier Referenzmarkierungs-Teilbereichen 7.1, 7.5, 7.11 und 7.13 auf Seiten des Maßstabes sind nunmehr die vier Referenzimpulssignal-Detektorbereiche D100, D101, D106, D107 in der Detektoranordnung 60 angeordnet. Sobald die Detektoranordnung 60 sich im Meßbetrieb an der entsprechenden Null- bzw. Referenzposition in Relation zum Maßstab befindet, resultiert ein Intensitätseinbruch des Referenzimpulssignales REF, der zur präzisen Erfassung der Referenzposition x_{REF} genutzt wird.
Zur Erzeugung der phasenverschobenen Inkrementalsignale INC₀, INC₉₀ werden die Ausgangssignale der Inkrementalsignal-Detektorbereiche D102 - D105 in der gezeigten Art und Weise paarweise mit den Eingängen nachgeordneter Differenzbildungs-Elemente DIF10, DIF20 verschaltet, d.h. D102 und D103 über DIF20 sowie D103 und D104 über DIF10. An den Ausgängen der beiden Differenzbildungs-Elemente DIF10, DIF20 liegen schließlich die beiden um 90° phasenverschobenen gleichstromanteilfreien Inkrementalsignale INC₀ und INC₉₀ zur Weiterverarbeitung an.

Um mittels der dargestellten Variante der Detektoranordnung 60 das gewünschte Referenzimpulssignal REF an der Referenzposition x_{REF} zu erzeugen, werden zum einen die Ausgänge aller Referenzimpulssignal-Detektorbereiche D100, D101, D106, D107 miteinander verschaltet. Das daraus resultierende Signal liegt am ersten Eingang eines weiteren Differenzbildungselementes DIF30 an. Desweiteren werden die phasenverschobenen Ausgangssignale aller Inkrementalsignal-Detektorbereiche D102 - D105 mit Hilfe eines Summierelementes SUM zu einem Referenzsignal mit konstantem Signalpegel aufsummiert. Das resultierende Referenzsignal wird dem zweiten Eingang des Differenzbildungselementes DIF30 zugeführt. Nach der Differenzbildung aus den beiden anliegenden Signalen über das Differenzbildungselement DIF30 resultiert das gewünschte Referenzimpulssignal REF.
Zur eventuell erforderlichen Anpassung des Referenzsignal-Pegels an die Ausgangssignale der Referenzimpulssignal-Detektorbereiche D100, D101, D106, D107 kann das im Beispiel der Figur 2a dargestellte Verstärkerelement AMP vor dem Differenzbildungselement DIF30 genutzt werden, dessen Verstärkungsfaktor entsprechend gewählt wird.
Alternativ könnte zur geeigneten Anpassung der verschiedenen Signalpegel auch vorgesehen werden, einem der beiden an der Differenzbildung beteiligten Signale einen entsprechenden Offset elektronisch aufzuaddieren.

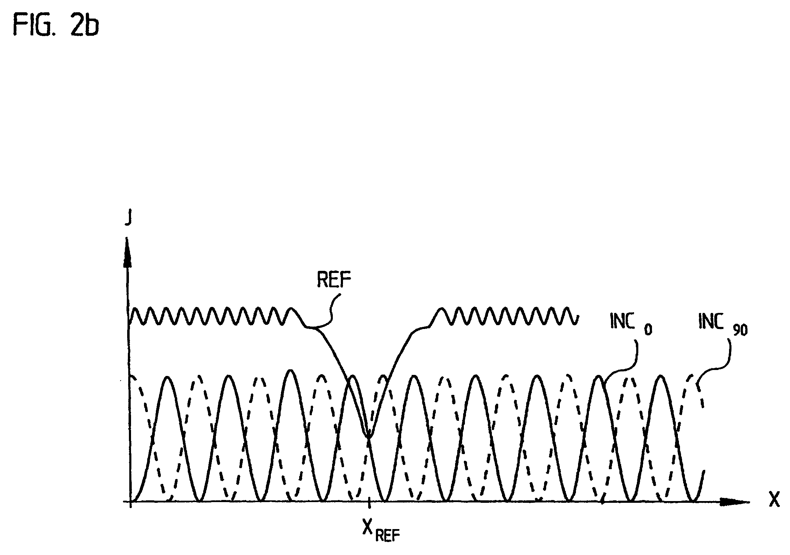

Die mit einer derartigen Detektoranordnung 60 erzeugten phasenverschobenen Inkrementalsignale INC₀, INC₉₀ sowie das Referenzimpulssignal REF an der Referenzposition X_{REF} sind in Figur 2b schematisch gezeigt. Deutlich erkennbar ist hierbei der Intensitätseinbruch des Referenzimpulssignales REF an der Referenzposition X_{REF}. Ebenfalls erkennbar ist der bei einer derartigen Anordnung resultierende periodische Signalanteil, der dem Referenzimpulssignal REF benachbart zur Referenzposition x_{REF} aufmoduliert ist und ggf. zu einer Beeinträchtigung der Detektionssicherheit führen kann. In der Darstellung von Figur 2b ist dieser periodische Signalanteil übertrieben dargestellt, d.h. selbstverständlich entspricht die Periodizität dieses Signalanteiles dem der Inkrementalsignale INC₀, INC₉₀. Anhand der nachfolgenden Ausführungsbeispiele werden noch verschiedene Möglichkeiten erläutert, wie dieser periodische Signalanteil am Referenzimpulssignal REF, der aus der Abtastung der Inkrementalteilung resultiert, minimiert bzw. eliminiert werden kann.

Die in Figur 2a erläuterte erste Variante der Abtasteinheit könnte in einer weiteren Ausführungsform noch dahingehend vereinfacht werden, daß lediglich zwei Referenzimpulssignal-Detektorbereiche vorgesehen werden, zwischen denen mindestens ein Inkrementalsignal-Detektorbereich angeordnet ist. Aufgrund einer erhöhten Unempfindlichkeit gegenüber Störeinflüssen, ist jedoch eine Ausbildung der Detektoranordnung mit jeweils mehreren Detektorbereichen für die Inkrementalsignale sowie das Referenzimpulssignal - wie in Figur 2a gezeigt - vorteilhaft.

Außerdem sind vorteilhafterweise links und rechts benachbart zu den Referenzimpulssignal-Detektorbereichen weitere Detektorbereiche für die Gewinnung von Inkrementalsignalen sowie Referenzimpulssignal-Detektorbereiche vorzusehen. Auf diese Art und Weise wird die Abtastfläche und damit auch die Verschmutzungsunempfindlichkeit erhöht. Insbesondere is es dabei günstig, die Summe aller Inkrementalsignal-Detektorbereiche größer zu wählen als die Summe der Referenzimpulssignal-Detektorbereiche, da sich derart der Einfluß des Referenzmarkierungsfeldes auf die erzeugten Inkrementalsignale minimieren läßt.

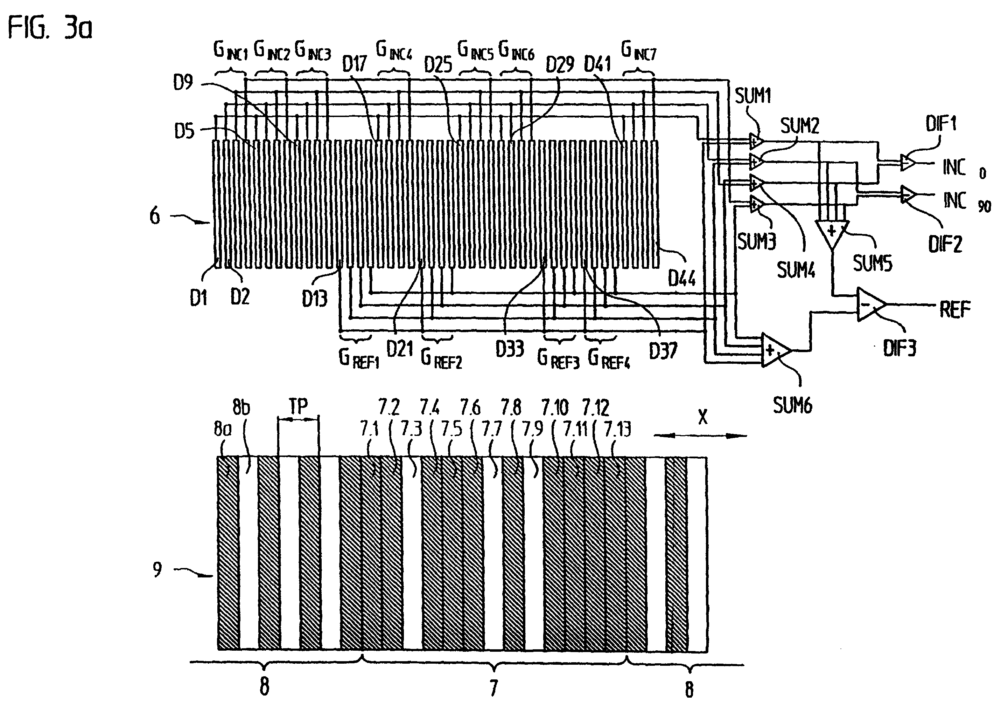

Eine Abtasteinheit einer zweiten, verbesserten Ausführungsform der erfindungsgemäßen Positionsmeßeinrichtung sei nachfolgend anhand der Figur 3a erläutert. Diese zeigt im oberen Teil wiederum eine Ansicht der Detektorebene der Detektoranordnung 6 aus Figur 1 in Verbindung mit verschiedenen Signalverarbeitungsbausteinen. Darunter ist in vergrößerter Form die Inkrementalteilungsspur 9 des Maßstabes 1 mit dem Referenzmarkierungsfeld 7 und der links und rechts daran angrenzenden Inkrementalteilung 8 dargestellt.
Zur Detektion der vom Maßstab 2 kommenden Strahlenbündel ist in diesem Ausführungsbeispiel der erfindungsgemäßen Positionsmeßeinrichtung detektorseitig nunmehr eine sogenannte strukturierte Detektoranordnung 6 vorgesehen. Diese besteht in der gezeigten Ausführungsform aus aktiven, d.h. strahlungsempfindlichen Detektorbereichen D1, D2, D3.....D44, die jeweils eine schmale Streifenform aufweisen und in Meßrichtung x periodisch und benachbart zueinander angeordnet sind. Hierzu ist beispielsweise ein geeignetes Halbleitersubstrat derart zu strukturieren, daß auf dem Substrat eine Reihe derartiger strahlungsempfindlicher Detektorbereiche D1 - D44 resultiert. Die verschiedenen aktiven Detektorbereiche D1 - D44 liefern im Fall der Relativbewegung von Maßstab und Abtasteinhelt jeweils Signalanteile, die in der nachfolgend beschrieben Weise zur Erzeugung phasenversetzter Inkrementalsignale INC₀, INC₉₀ sowie zur Erzeugung eines Referenzimpulssignales REF herangezogen werden.

Die aktiven Detektorbereiche D1 - D44 der Detektoranordnung 6 weisen im dargestellten Ausführungsbeispiel einer sog. Einfeldabtastung jeweils einen Rasterabstand r in Meßrichtung x auf, der kleiner als die Teilungsperiode TP der abgetasteten Inkrementalteilung 8 gemäß der Definition in Figur 3a ist. TP entspricht dabei der Summe aus der Breite eines durchlässigen und der Breite eines undurchlässigen Inkrementalteilungs-Teilbereiches 8a oder 8b in Meßrichtung x. Der Rasterabstand r der Detektoranordnung ergibt sich damit als die Summe aus der Breite d der inaktiven Zonen ziwchen den aktiven Detektorbereichen und der Breite b der aktiven Detektorbereiche, d.h. r = d + b. In der gezeigten Ausführungsform ist r = TP/4 gewählt, was einer Phasenverschiebung der Signale benachbarter Detektorbereiche von 90° entspricht. Die Länge der aktiven Detektorbereiche D1 - D44 senkrecht zur Meßrichtung x ist abhängig von der jeweiligen optischen Konfiguration zu optimieren.
Die Relativanordnung der aktiven Detektorbereiche D1 - D44 ist in Meßrichtung x in dieser Ausführungsform folglich derart gewählt, daß innerhalb einer Teilungsperiode TP alternierend jeweils aktive Detektorbereiche D1 - D44 und inaktive Detektorbereiche gruppenweise angeordnet sind. Der Abstand d benachbarter aktiver Detektorbereiche D1 - D44 und damit die Breite der inaktiven Zonen beträgt in diesem Ausführungsbeispiel demzufolge TP/8.
Über die gesamte Detektoranordnung 6 sind im gezeigten Ausführungsbeispiel in Meßrichtung x insgesamt 44 aktive Detektorbereiche D1 - D44 äquidistant verteilt über elf Teilungsperioden TP in elf Viererguppen angeordnet.

Die gezeigte, beabstandete Anordnung der aktiven Detektorbereiche D1 - D44 ist hierbei keineswegs erfindungswesentlich, d.h. es könnte auch eine unmittelbar benachbarte Anordnung aktiver Detektorbereiche im Abstand d ≈ 0 vorgesehen werden. In einem solchen Fall wäre insbesondere eine erhöhte Signalintensität aus den Abtastsignalen zu erwarten, die aus den verschiedenen Detektorbereichen gewonnen werden, da dann keine Bereiche der strukturierten Detektoranordnung 6 für die Signalgewinnung ausfallen. Desweiteren können selbstverständlich auch andere Relativanordnungen von aktiven Detektorbereichen im Rahmen der vorliegenden Erfindung realisiert werden, was anhand weiterer Ausführungsbeispiele nachfolgend noch näher erläutert wird. So wäre es etwa möglich den Rasterabstand r = TP/3 zu wählen, was eine Phasenverschiebung zwischen den Signalen benachbarter Detektorbereiche von 120° zur Folge hätte.

Die im Beispiel von Figur 3a gezeigte Anordnung der aktiven Detektorbereiche D1 - D44 hat zur Folge, daß die innerhalb einer Teilungsperiode TP liegenden, benachbarten aktiven Detektorbereiche einer Vierergruppe bei der optischen Abtastung der Inkrementalteilung 8 sowie des Referenzmarkierungsfeldes 7 vier, jeweils um 90° phasenversetzte Abtastsignale liefern. Über die gezeigte Anordnung der Detektorbereiche ist somit eine sogenannte "Einfeldabtastung" des Maßstabes gewährleistet, bei der sämtliche Signalanteile zur Erzeugung der Inkrementalsignale sowie des Referenzimpulssignales stets nur aus einer Teilungsperiode des abgetasteten Maßstabes stammen. Eine derartige Abtastung ist insbesondere hinsichtlich der Unempfindlichkeit gegenüber großflächigen Verschmutzungen des Maßstabes vorteilhaft, da die phasenverschobenen Signalantelle, die zur Erzeugung der Abtastsignale beitragen, allesamt gleich beeinflußt werden.

Wie bereits oben erwähnt könnte durch die geeignete Wahl der Lage und Größe der Detektorbereiche beispielsweise auch eine sog. Quasi-Einfeldabtastung im Rahmen der vorliegenden Erfindung realisiert werden, bei der die zur Signalgewinnung herangezogenen Signalanteile aus Detektorbereichen stammen, die sich über mehr als eine Teilungsperiode in Meßrichtung angeordnet erstrecken, wobei benachbarte Detektorbereiche jeweils Signalanteile mit unterschiedlichen Phasenlagen liefern. Die Breite b der Detektorbereiche ist dann b ≤ TP/2 zu wählen, der Rasterabstand r benachbarter Detektorbereiche ist vorzugsweise über die Beziehung r = (21 + 1) ∗ TP/4 zu wählen, mit I = 0, 1, 2,..... Die Wahl von I = 0 stellt dabei die erwähnte Einfeldabtastung dar. Je nach gewähltem I resultieren dabei unterschiedliche Phasenlagen der einzelnen, jeweils benachbarten Detektorbereiche. So ergeben sich im Fall I = 1 etwa die Phasenlagen 0°, 270°, 180° und 90° von jeweils vier benachbarten Detektorbereichen.

Alternativ hierzu könnte auch r = I ∗ TP/3 gewählt werden, wobei I dann eine ganze, nicht durch 3 teilbare Zahl darstellt, d.h. I = 1, 2, 4, 5, 7, ...

Im Ausführungsbeispiel der Figur 3a wird von den insgesamt elf Vierergruppen aktiver Detektorbereiche D1 - D44 nunmehr ein Teil dieser Vierergruppen zur Erzeugung des Referenzimpulssignales REF herangezogen; nachfolgend seien diese Vierergruppen als Referenzimpulssignal-Detektorbereiche G_{REFn} bezeichnet. Hierbei handelt es sich bei den Referenzimpulssignal-Detektorbereichen G_{REFn} um die von links aus vierte, sechste, neunte und zehnte Vierergruppe G_{REF1}, G_{REF2}, G_{REF3}, G_{REF4} mit den aktiven Detektorbereichen D13 - D16, D21 - D24, D33 - D40. Auf die konkrete Verarbeitung der Ausgangssignale der Referenzimpulssignal-Detektorbereiche G_{REFn} wird nachfolgend noch detaillierter eingegangen.
Die verbleibendenden Vierergruppen aktiver Detektorbereiche werden hingegen zur Erzeugung der phasenversetzten Inkrementalsignate INC₀ und INC₉₀ herangezogen; diese Gruppen werden nachfolgend als Inkrementalsignal-Detektorbereiche G_{INCn} bezeichnet. Bei den Inkrementalsignal-Detektorbereichen G_{INCn} handelt es sich von links ausgehend um die erste bis dritte Vierergruppe G_{INC1} - G_{INC3} mit den Detektorbereichen D1 - D12, die fünfte Viererguppe G_{INC4} mit den Detektorbereichen D17 - D20, die siebte und achte Vierergruppe G_{INC5}, G_{INC6} mit den Detektorbereichen D25 - D32 sowie um die elfte Vierergruppe G_{INC7} mit den Detektorbereichen D41 - D44. Die zu den Inkrementatsignal-Detektorbereichen G_{INCn} gehörenden aktiven Detektorbereiche sind dabei mit Ausnahme der randseitigen, ersten und elften Inkrementalsignal-Detektorbereichen G_{INC1} und G_{INC7} zwischen den Detektorbereichen der Referenzimpulssignal-Detektorbereiche angeordnet.

Die Lage der Referenzimpulssignal-Detektorbereiche G_{REFn}, die in diesem Ausführungsbeispiel aus mehreren Vierergruppen G_{REF1} - G_{REF4} aktiver Detektorbereiche bestehen und die zur Erzeugung des Referenzimpulssignales REF dienen, ist erfindungsgemäß wiederum in Abhängigkeit von der Strukturierung des Referenzmarkierungsfeldes 7 auf dem Maßstab gewählt. Im gezeigten Ausführungsbeispiel mit kollimierter Beleuchtung des Maßstabes entspricht die räumliche Lage dieser Referenzimpulssignal-Detektorbereiche G_{REF1} - G_{REF4} in der Detektoranordnung 6 der räumlichen Lage von jeweils zwei aufeinanderfolgenden undurchlässigen Referenzmarkierungs-Teilbereichen im Referenzmarkierungsfeld 7 auf dem Maßstab, d.h. der Lage der Referenzmarkierungs-Teilbereiche 7.1 und 7.2, 7.4 und 7.5, 7.10 und 7.11 sowie 7.12 und 7.13. Die räumliche Lage der zur Erzeugung des Referenzimpulssignales herangezogenen Referenzimpulssignal-Detektorbereiche G_{REFn} wird somit in Abhängigkeit der räumlichen Lage der die periodische Maßstabstruktur zerstörenden lichtundurchlässigen Referenzmarkierungs-Teilbereiche 7.2, 7.5, 7.11 und 7.13 gewählt.
Die Lage der zur Erzeugung des Referenzimpulssignales REF herangezogenen Referenzimpulssignal-Detektorbereiche G_{REF1} - G_{REF4} erfolgt im Fall der kollimierten Beleuchtung demzufolge unmittelbar in Abhängigkeit der Strukur des Referenzmarkierungsfeldes 7 auf dem Maßstab. Es wird dadurch die aperiodische Struktur des Referenzmarkierungsfeldes 7 in der Detektorebene durch die gewählten aktiven Detektorbereiche der Referenzimpulssignal-Detektorbereiche G_{REFn} zur Detektion des Referenzimpulssignales REF reproduziert.

Diese exakte Reproduktion der Struktur des Referenzmarkierungsfeldes durch die Wahl der zur Referenzimpulssignal-Bildung herangezogenen Referenzimpulssignal-Detektorbereiche G_{REFn} ist jedoch keinesfalls zwingend für die vorliegende Erfindung. Beispielsweise kann im Fall einer sogenannten divergenten Beleuchtung des Maßstabes ohne Kollimatoroptik auch erforderlich sein, aktive Detektorbereiche der Referenzimpulssignal- Detektorbereiche G_{REFn} zur Referenzimpulssignal-Erzeugung auszuwählen, die nicht exakt die Struktur des Referenzmarkierungsfeldes in der Detektorebene reproduzieren. Es erfolgt in einem derartigen Fall die gezielte Abstimmung von aperiodischen Strukturen auf Seiten des Referenzmarkierungsfeldes sowie von detektorseitigen Strukturen. Ebenso kann es im Fall einer divergenten Beleuchtung ggf. notwendig sein, die Referenzimpulssignal-Detektorbereiche so auszuwählen, daß diese einem vergrößerten Bild des Referenzmarkierungsfeldes auf dem Maßstab entsprechen. Nichtsdestotrotz liegt auch im Fall aperiodischer Strukturen im Referenzmarkierungsfeld als auch bei der aperiodischen Lage aktiver Detektorbereiche zur Referenzimpulssignal-Erzeugung eine definierte Korrelation bzw. Abhängigkeit zwischen der Ausgestaltung des Referenzmarkierungsfeldes und der Auswahl von Referenzimpulssignal-Detektorbereichen zur Referenzimpulssignal-Erzeugung vor. Bezüglich der Ausgestaltung geeigneter Anordnungen zur Erzeugung von Referenzimpulssignalen bei einer divergenten Beleuchtung sei an dieser Stelle ergänzend auf die DE 197 26 936 der Anmelderin verwiesen.

Zur Erzeugung der um 90° phasenversetzten Inkrementalsignale INC₀ und INC₉₀ mit Hilfe der Abtasteinheit ist im gezeigten Ausführungsbeispiel der Figur 3a nunmehr vorgesehen, jeweils die k-ten aktiven Detektorbereiche D1 - D44 (k = 1....4) der Inkrementalsignal- Detektorbereiche G_{INC1} - G_{INC7} geeignet bzw. phasenrichtig miteinander zu verschalten, die wie oben erwähnt primär zur Erzeugung der phasenversetzten Inkrementalsignale INC₀ und INC₉₀ herangezogen werden. Hierbei handelt es sich im Fall k = 1 um die aktiven Detektorbereiche D1, D5, D9, D17, D25, D29 und D41, die miteinander elektrisch leitend verbunden werden und auf einen ersten Eingang eines ersten Summierelementes SUM1 geschaltet werden. Vor den jeweiligen Summierelementen SUM1 - SUM4 können ggf. noch - nicht gezeigte - Vorverstärker oder Strom-Spannungs-Wandler angeordnet werden. Auf den zweiten Eingang des ersten Summierelementes SUM1 werden die phasengleichen Signale der ersten aktiven Detektorbereiche D13, D21, D33 und D37 (k = 1) derjenigen Vierergurppen geschaltet, die zu den erwähnten Referenzimpulssignal-Detektorbereichen G_{REFn} gehören und welche primär zur Erzeugung des Referenzimpulssignales REF herangezogen werden.
Das am Ausgang des ersten Summierelementes SUM1 anliegende Summensignal wird zur Erzeugung des Inkrementalsignales INC₀ auf den ersten Eingang eines Differenzbildungselementes DIF1 geschaltet. Auf den zweiten Eingang des Differenzbildungselementes DIF1 werden die über das Summierelement SUM3 aufsummierten Signalantelle derjenigen, dritten (k = 3) aktiven Detektorbereiche D3, D7, D11, D15, D19, D23, D27, D31, D35, D39 und D43 jeder Viererguppe geschaltet, die Abtastsignale liefern, welche um 180° phasenversetzt zu den Ausgangssignalen der ersten, aktiven Detektorbereiche (k = 1) jeder Vierergruppe sind. Am Ausgang des Differenzbildungselementes DIF1 liegt dann das erwünschte gleichstromanteilfreie erste Inkrementalsignal INC₀ an.

In volkommen analoger Art und Weise erfolgt auch durch die gezeigte Verschaltung der zweiten und vierten aktiven Detektorbereiche (k = 2, 4) jeder Vierergruppe und durch die Verarbeitung der einzelnen Signalanteile über die Summier- und Differenzbildungselemente SUM2, SUM4 und DIF2 die Erzeugung des zweiten Inkrementalsignales INC₉₀, das einen Phasenversatz von 90° zum ersten Inkrementalsignal INC₀ aufweist.

Zur Bildung des Referenzimpulssignales REF werden zum einen nunmehr jeweils die n-ten aktiven Detektorbereiche (k = 1, 2, 3, 4) jeder Vierergruppe der Referenzimpulssignal-Detektorbereiche G_{REF1} - G_{REF4} miteinander elektrisch leitend verbunden, die in Abhängigkeit von der gewählten Struktur des Referenzmarkierungsfeldes 7 auf dem Maßstab primär zur Erzeugung des Referenzimpulssignales REF herangezogen werden. So werden hierzu im Fall k = 1 etwa die aktiven Detektorbereiche D13, D21, D33 und D37 der von links aus vierten, sechsten, neunten und zehnten Referenzimpulssignal-Detektrobereichen G_{REF1} - G_{REF4} miteinander verbunden; analog erfolgt dies bezüglich der aktiven Detektorbereiche mit k = 2 - 4. Die kombinierten Signalanteile dieser ausgewählten Detektorbereiche werden anschließend über ein Summierelement SUM6 aufsummiert und das resultierende Summensignal auf den ersten Eingang eines Differenzbildungselementes DIF3 geschaltet. Am zweiten Eingang dieses Differenzbildungselementes DIF3 liegt ein Referenzsignal an, das aus allen in Summe geschalteteten Signalanteilen der aktiven Detektorbereiche D1 - D44 erzeugt wird, was letztlich einem sogenannten Gleichlichtsignal entspricht. Am Ausgang des Differenzbildungselementes DIF3 resultiert wiederum das gewünschte Referenzimpulssignal REF.
Alternativ zu dieser Variante könnte auf den zweiten Eingang des Differenzbildungselementes DIF3 auch ein Signal gelegt werden, das lediglich aus der Summation der Signalanteile der Inkrementalsignal-Detektorbereiche resultiert. Als Referenzsignal würde demzufolge kein Gleichlichsignal mit einem stets konstanten Signalpegel vorliegen, sondern ein sogenanntes Gegentaktsignal.

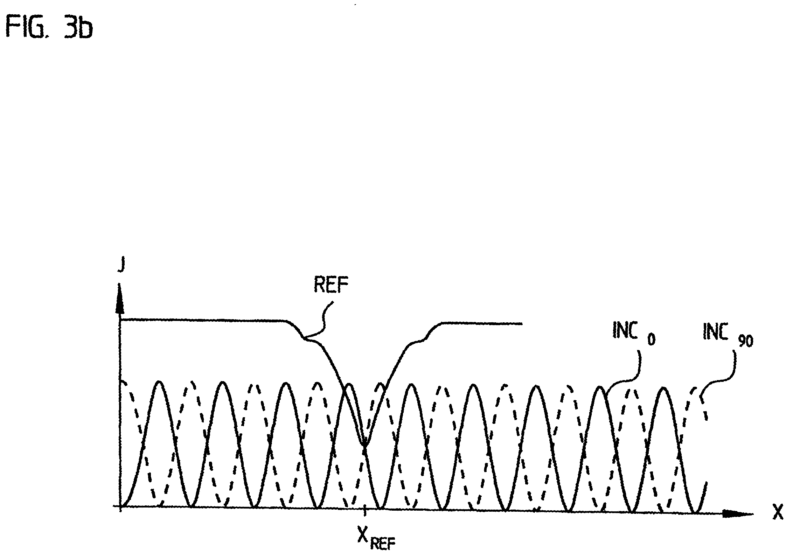

Die auf erfindungsgemäße Art und Weise erzeugten Inkrementalsignale, d.h. INC₀, INC₉₀ sind wiederum in Figur 3b dargestellt; ebenso ist in dieser Darstellung das Referenzimpulssignal REF an der Referenzposition x_{Ref} gezeigt. Wie auch aus dieser lediglich schematisierten Darstellung erkennbar ist, können aufgrund der erläuterten erfindungsgemäßen Maßnahmen somit auch im räumlichen Bereich der Referenzposition x_{Ref} neben dem Referenzimpulssignal REF die Inkrementalsignale INC₀, INC₉₀ erzeugt werden.

Wie aus der Figur 3b ebenfalls erkennbar ist, weist das Referenzimpulssignal REF nunmehr keinen aufmodulierten Signalanteil mit der Periode der Inkrementalsignale INC₀, INC₉₀ mehr auf. Dieser unerwünschte Signalanteil am Referenzimpulssignal REF wird im beschriebenen zweiten Ausführungsbeispiel gefiltert, indem für die Erzeugung des Referenzimpulssignales REF zu jedem Indexwert k = 1, 2, 3, 4 stets die gleiche Anzahl aktiver Detektorbereiche innnerhalb der Referenzlmpulssignal-Detektorbereiche G_{REF1} - G_{REF4} ausgewählt wird, d.h. im k = 1, 2, 3, 4 innerhalb der Referenzimpulssignal-Detektorbereiche G_{REF1} - G_{REF4} genutzt, die wiederum Signale mit allen vorhandenen Phasenlagen liefern. Die Summe gleich großer Signale aller vier Phasenlagen wiederum enthält dann keinen periodischen Signalanteil mehr, der aus der Abtastung der Inkrementalteilung resultiert. Dabei ist es nicht notwendig, daß innerhalb eines Referenzimpulssignal-Detektorbereiches bereits alle Phasenlagen aufsummiert werden. Es reicht vielmehr ebenfalls aus, in der Gesamtheit aller Referenzimpulssignal-Detektorbereiche zu jeder Phasenlage etwa gleich viele Detektorbereiche aufzusummieren.

In Bezug auf die Filterung des Inkrementalsignalanteiles am Referenzimpulssignal sei an dieser Stelle ergänzend auf die verschiedenen Maßnahmen verwiesen, die in der Anmeldung 197 34 136.5 der Anmelderin offenbart sind.

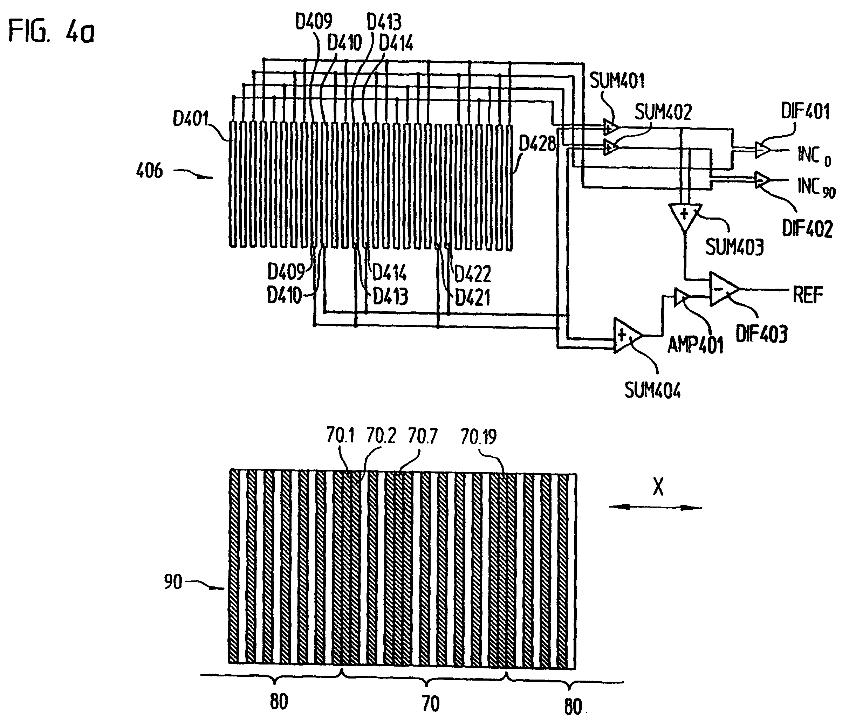

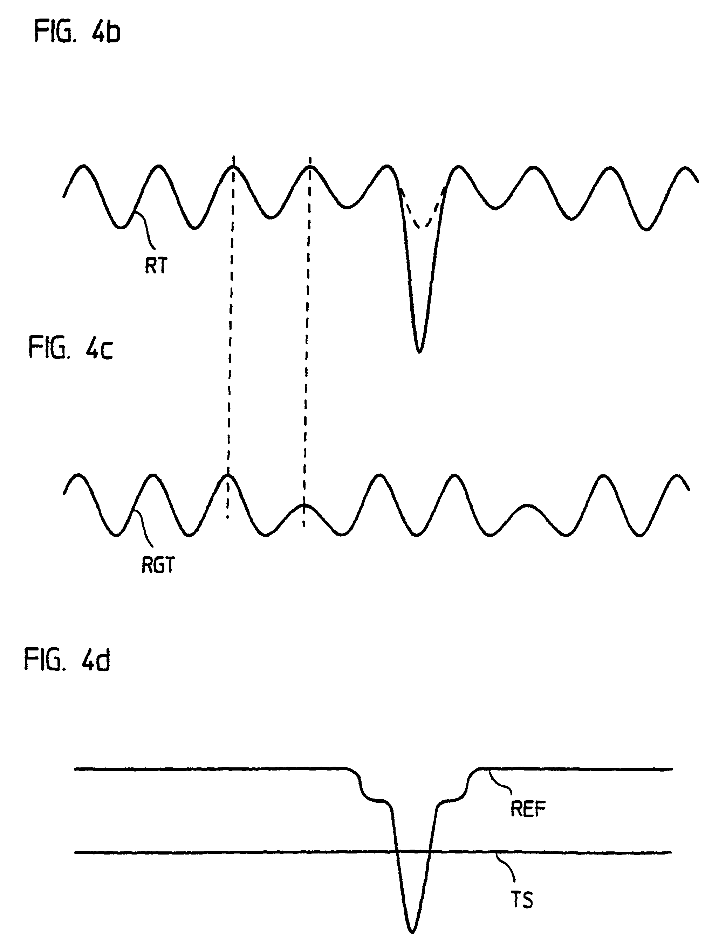

Eine Abtasteinheit einer dritten Ausführungsform der erfindungsgemäßen Positionsmeßeinrichtung ist in Figur 4a in Verbindung mit einem Teil des damit abgetasteten Maßstabes gezeigt.
In der Inkrementalteilungsspur 90 mit der Inkrementalteilung 80 ist auf dem Maßstab wiederum integriert ein Referenzmarkierungsfeld 70 angeordnet. In Bezug auf die Ausgestaltung des Referenzmarkierungsfeldes 70 wurde in diesem Ausführungsbeispiel nunmehr eine geringfügig andere Variante gewählt. So sind im Referenzmarkierungsfeld 70 lediglich drei Referenzmarkierungs-Teilbereiche 70.1, 70.7 und 70.19 abweichend von der periodischen Anordnung durchlässiger und undurchlässiger Teilbereiche undurchlässig ausgebildet.

Die gezeigte Detektoranordnung 406 umfaßt wiederum eine Reihe identischer Detektorbereiche D401 - D428, welche in Meßrichtung x benachbart zueinander angeordnet sind und zur Erzeugung der Inkrementalsignale INC₀, INC₉₀ wie auch zur Erzeugung des Referenzimpulssignales REF herangezogen werden. Die identisch ausgebildeten Dektorbereiche D401 - D428 weisen in Meßrichtung x jeweils eine Breite b = TP/2 auf. Der Abstand benachbarter Detektorbereiche wird d = TP/4 gewählt, d.h. der Rasterabstand r beträgt damit r = 3TP/4.
Entsprechend den vorhergehenden Ausführungsbeispielen werden von den vorhandenen Detektorbereichen in Abhängigkeit der Ausbildung des Referenzmarkierungsfeldes 7 auf dem Maßstab bestimmte Referenzimpuissignal-Detektorbereiche ausgewählt. Als Referenzimpulssignal-Detektorbereiche zur Erzeugung eines Referenzimpulssignales REF an einer definierten Referenzposition dienen dabei die Detektorbereiche D409, D410, D413, D414, D421 und D422. Die Anordnung bzw. Auswahl der Referenzimpulssignal-Detektorbereiche erfolgt dabei in Abhängigkeit der Lage derjenigen Teilbereiche 70.1, 70.7 und 70.19, die im Referenzmarkierungsfeld 70 auf dem Maßstab die Periodizität der abgetasteten Struktur zerstören.
Die verbleibenden Detektorbereiche der Detektoranordnung 406 fungieren wiederum als Inkrementalsignal-Detektorbereiche, die primär zur Erzeugung der inkrementalsignale INC₀, INC₉₀ herangezogen werden. Hierzu gehören die Detektorbereiche D401 - D408, D411 - D412, D415 - D420 sowie D423 - D428.

Das gezeigte dritte Ausführungsbeispiel der Figur 4a unterscheidet sich nun im wesentlichen in zwei Punkten vom vorhergehenden Ausführungsbeispiel der erfindungsgemäßen Positionsmeßeinrichtung. So ermöglichte die Variante gemäß Figur 3a eine sogenannte Einfeld-Abtastung, bei der sämtliche Signalanteile zur Erzeugung von Inkremental- und Referenzimpulssignalen aus jeweils einer Teilungsperiode des Maßstabes stammen; im Ausführungsbeispiel der Figur 4a ist hingegen eine sog. Vernier-Abtastung realisiert. Desweiteren unterscheidet sich die Variante gemäß Figur 4a in der Art und Weise der Filterung des unerwünschten Inkrementalsignalanteiles am Referenzimpulssignal vom Ausführungsbeispiel der Figur 3a, wo dies durch die Verschaltung aller Detektorbereiche mit den Indizes k = 1 - 4 der Referenzimpulssignal-Detektorbereiche erfolgte.

Im Ausführungsbeispiel der Figur 4a ist nunmehr zum einen eine sogenannte Vernier-Abtastung realisiert. Die aufeinanderfolgende Anordnung der verschiedenen Detektorbereiche D401 - D428 weicht demzufolge von der in Figur 2a erläuterten Anordnung ab, inbesondere die Phasenbeziehungen der Signale aus den einzelnen, benachbart angeordneten Detektorbereichen D401 - D428 unterscheiden sich. Unter einer Vernier-Abtastung sei dabei allgemein eine Abtastung einer periodischen Maßstabstruktur mittels einer periodischen Abtaststruktur verstanden, wobei die Mittenabstände phasengleicher Detektorbereiche größer als die Periode des durch den Maßstab in der Detektorebene erzeugten Intensitätsmusters sind. Die Periodizitäten von Maßstab- und Abtaststruktur weichen demzufolge voneinander ab.

Zum anderen zeigt das Ausführungsbeispiel der Figur 4a eine weitere Variante zum Filtern des aufmodulierten, periodischen Inkrementalsignalanteiles am Referenzimpulssignal REF, wie nachfolgend erläutert wird.

Zur Erzeugung der Inkrementalsignale INC₀, INC₉₀ werden gemäß Figur 4a jeweils Inkrementalsignal-Detektorbereiche miteinander verschaltet, die bei der Abtastung phasengleiche Signalanteile liefern. Zwei der entsprechenden vier Signale mit jeweils um 90° unterschiedlicher Phasenlage gelangen im gezeigten Ausführungsbeispiel auf die Eingänge von Summierelementen SUM401, SUM402, denen desweiteren über den zweiten Eingang jeweils ein Signalanteil zugeführt wir, der aus den verschalteten Referenzimpulssignal-Detektorbereichen D409, D410, D413, D414, D421, D422 mit der jeweils gleichen Phasenlage wie das Inkrementalsignal stammt.

Selbstverständlich könnten alternativ zum gezeigten Ausführungsbeispiel statt lediglich zwei Phasenlagen zur Erzeugung des Referenzimpulssignales auch andere Kombinationen genutzt werden, beispielsweise eine oder drei Phasenlagen etc..

Die an den Ausgängen der Summierelemente SUM401, SUM402 anliegenden Signale werden ebenso wie die restlichen Inkrementalsignalanteile in der gezeigten Art und Weise schließlich zwei Differenzbildungselementen DIF401 und DIF402 zugeführt, an deren Ausgängen die gleichstromanteilfreien Inkrementalsignale INC₀, INC₉₀ anliegen.

Zur Erzeugung eines gefilterten Referenzimpulssignales ist vorgesehen, die Ausgänge der ausgewählten Referenzimpulssignal-Detektorbereiche D409, D410, D413, D414, D421, D422 mit jeweils gleicher Phasenlage miteinander zu verschalten und die beiden phasenverschiedenen Signalanteile über das Summierelement SUM404 aufzusummieren. Es werden demzufolge die Ausgangssignale der Referenzimpulssignal-Detektorbereiche D409, D413, und D421 miteinander verbunden, die die Phasenlage 0° aufweisen; analog erfolgt dies mit den Referenzimpulssignal-Detektorbereichen D410, D414 und D422, die jeweils die Phasenlage 270° aufweisen. Der am Ausgang des Summierelementes SUM404 anliegende erste Referenzimpulssignalanteil RT wird einem ersten Eingang eines Differenzbildungselementes DIF403 zugeführt. Am zweiten Eingang des Differenzbildungselementes DIF403 liegt ein zweiter Referenzimpulssignalanteil RGT an. Der zweite Referenzimpulssignalanteil RGT weist hierbei insbesondere im Bereich benachbart zur Referenzposition x_{REF} eine Phasenlage auf, die es ermöglicht, durch die Differenzbildung aus beiden Signalanteilen RT, RGT den unerwünschten Inkrementalsignalanteil am Referenzimpulssignal REF zu eliminieren bzw. auszufiltern. Die hierzu erforderliche Phasenlage bzw. der Phasenhub der Signalanteile kann dabei durch die geeignete Verschaltung bzw. Verstärkung der Signalanteile mit gleicher Phasenlage bzw. aller Signalanteile geeignet eingestellt werden. Die Differenzbildung aus den beiden Referenzimpulssignalanteilen RT, RGT erfolgt mit Hilfe des bereits erwähnten Differenzbildungselementes DIF403. An dessen Ausgang liegt schließlich das gewünschte Referenzimpulssignal REF an, das benachbart zur Referenzposition x_{REF} keinen aufmodulierten Inkrementalsignalanteil mehr aufweist.

Zur Erzeugung des zweiten Referenzimpulssignalanteiles RGT ist im Ausführungsbeispiel der Figur 4a vorgesehen, die an den Ausgängen der zwei Summierelemente SUM401, SUM402 anliegenden phasenverschiedenen Signale mit Hilfe eines weiteren Summierelementes SUM403 aufzusummieren. Das am Ausgang des Summierelementes SUM403 anliegende Signal RGT wird dann wie beschrieben dem zweiten Eingang des Differenzbildungselementes DIF403 zugeführt.

Um eine Anpassung der Signalpegel derjenigen Sigale vorzunehmen, die dem Differenzbildungselement DIF403 zugeführt werden, ist im gezeigten Ausführungsbeispiel desweiteren dem Summierelement SUM404 ein Verstärkerelement AMP401 mit einem definierten gewähltem oder aber einstellbarem Verstärkungsfaktor nachgeordnet. Über dieses Verstärkerelement können die Signalpegel der Signale RT und RGT geeignet gewählt werden, was in diesem Ausführungsbeispiel insofern von Bedeutung ist, als zur Bildung der beiden Signale RT und RGT jeweils eine unterschiedliche Anzahl von Detektorbereichen herangezogen wurde und dementsprechend unterschiedliche Signalintensitäten resultieren. Selbstverständlich kann desweiteren auch zwischen dem Summierelement SUM403 und dem Differenzbildungselement DIF403 ein weiteres Verstärkerelement angeordnet werden. Ebenso wäre wie bereits oben erwähnt eine elektronische Addition eines geeigneten Offsets zu einem der beiden Signalanteile möglich.

Der Signalverlauf der beiden erzeugten Referenzimpulsignatanteite RT, RGT im Bereich der Referenzposition X_{REF} sowie das letztlich bei der Differenzbildung resultierende Referenzimpulssignal REF ist in den Figuren 4a - 4c skizziert. In Figur 4c ist desweiteren eine Triggerschwelle TS eingezeichnet, mit deren Hilfe aus dem Referenzimpulsignal REF in bekannter Art und Weise über ein - nicht gezeigtes Triggerelement - ein Rechtecksignal erzeugt werden kann.

Zur Eliminierung des unerwünschten Inkrementalsignalanteiles am Referenzimpulssignal REF ist in dieser Ausführungsform demzufolge vorgesehen, mindestens zwei Referenzimpulssignalanteile mit einer derartigen Relativ-Phasenlage zu erzeugen, daß durch die Kombination der verschiedenen Referenzimpulssignalanteile insbesondere benachbart zur Referenzposition dieser periodische Inkrementalsignalanteil beseitigt werden kann. Je nach Phasenlage der erzeugten Referenzimpulssignalanteile kann dies durch Addition oder aber Differenzbildung erfolgen usw..
Selbstverständlich existieren demzufolge neben der gezeigten Anordnungsvariante weitere Möglichkeiten, eine derartige Eliminierung des unerwünschten Inkrementalsignalanteiles am Referenzimpulssignal REF durch Kombination verschiedenster erzeugter Referenzimpulssignalanteile vorzunehmen.

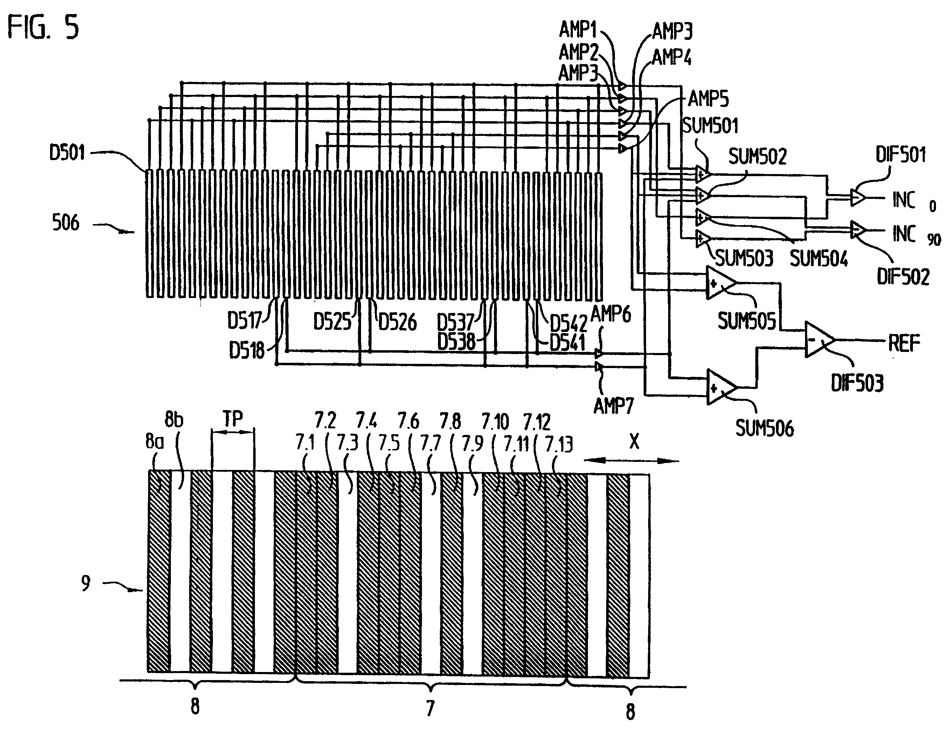

Eine nochmals weitergehende Ausgestaltung des dritten Ausführungsbeispieles zeigt Figur 5, anhand der ein viertes Ausführungsbeispiel der erfindungsgemäßen Positionsmeßeinrichtung erläutert sei.
Der Aufbau der gezeigten Abtastanordnung 506 ist hierbei ähnlich zum vorhergehenden Ausführungsbeispiel. Von den Detektorbereichen D501 - D548 dienen wiederum bestimmte Detektorbereiche als Referenzimpulssignal-Detektorbereiche D517, D518, D525, D526, D537, D538, D541, D542. Diese wurden erneut in Abhängigkeit der gewählten Ausbildung des Referenzmarkierungsfeldes 7 auf dem Maßstab gewählt. Die restlichen Detektorbereiche der Detektoranordnung 506 fungieren als Inkrementalsignal-Detektorbereiche.
Die Erzeugung der beiden Inkrementalsignale INC₀, INC₉₀ erfolgt prinzipiell wie im vorhergehenden Ausführungsbeispel, auf das an dieser Stelle lediglich verwiesen sei.
Das Ausführungsbeispiel der Figur 5 unterscheidet sich nunmehr von der vorhergehend erläuterten Variante dahingehend, daß eine alternative Erzeugung der verschiedenen Referenzimpulssignalanteile RT, RGT vorgesehen ist, die letztlich zur Bildung des Referenzimpulssignales REF herangezogen werden. Analog zur Terminologie des vorhergenden Ausführungsbeispieles ist insbesondere eine andere Variante zur Erzeugung des zweiten Referenzimpulssignalanteiles RGT vorgesehen, das neben dem ersten Referenzimpulssignalanteil RT dem Differenzbildungselement DIF503 zugeführt wird. So ist nunmehr zur Erzeugung des zweiten Referenzimpulssignalanteiles RGT vorgesehen, lediglich zwei unterschiedliche Phasenlagen ausgewählter Inkrementalsignal-Detektorbereiche über das Summierelemenet SUM505 aufzusummieren und dem zweiten Eingang des Differenzbildungselementes DIF 503 zuzuführen. Die Auswahl geeigneter Inkrementalsignal-Detektorbereiche erfolgt hierbei im Hinblick auf eine möglichst gute Unterdrückung von störenden Signalspitzen des Referenzimpulssignales REF außerhalb der Referenzposition X_{REF}. Um nunmehr die Eliminierung des unerwünschten Inkrementalsignalanteiles am Referenzimpulssignal REF sicherzustellen, sind in den Signalverbindungleitungen aller phasengleich verbundenen Detektorbereiche Verstärkerelemente AMP1 - AMP7 angeordnet, die jeweils eine definiert einstellbare Verstärkungscharakteristik besitzen. Die Verstärkungscharakteristik dieser Verstärkerelemente AMP1 - AMP7 wird dabei derart eingestellt, daß insbesondere bei der Differenzbildung aus den beiden Referenzimpulssignalanteilen über das Differenzbildungselement DIF503 eine Eliminierung des unerwünschten Inkrementalsignalanteiles am Referenzimpulssignal REF resultiert. Dies bedeutet, daß demzufolge auf diese Art und Weise sichergestellt wird, daß im Bereich benachbart zur Referenzposition x_{REF} die verschiedenen Referenzimpulssignalanteile RT, RGT im wesentlichen gleiche Amplituden aufweisen.

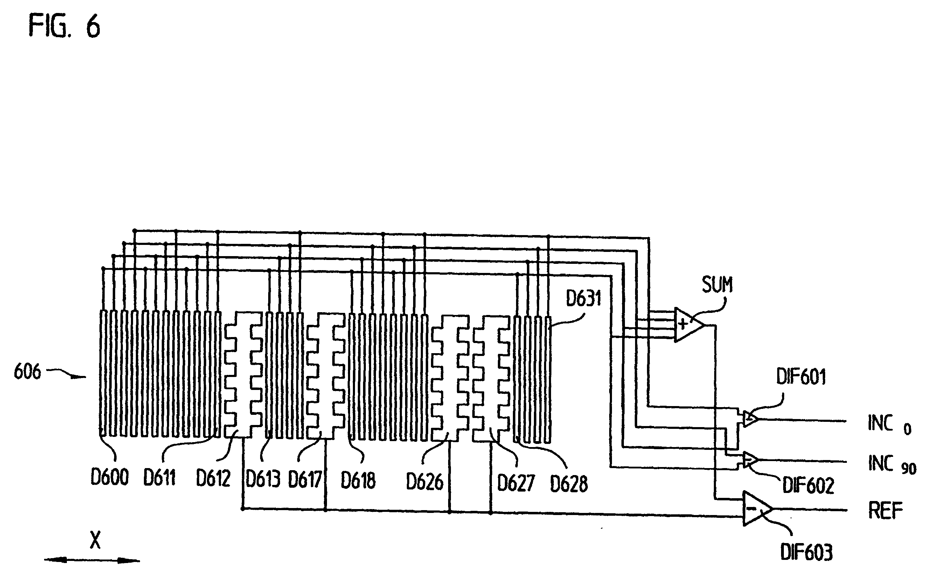

Eine Abtasteinheit einer weiteren, fünften Ausführungsform der erfindungsgemäßen Positionsmeßeinrichtung sei nachfolgend anhand der Figur 6 kurz erläutert, die wiederum eine Draufsicht auf die Detektorebene einer strukturierten Detektoranordnung 606 mit verschiedenen Signalverarbeitungsbausteinen zeigt.
Die strukturierte Detektoranordnung 606 umfaßt wiederum eine Reihe von Detektorbereichen D600 - D631, die in Meßrichtung x benachbart zueinander angeordnet sind. Wie bereits beim zweiten Ausführungsbeispiel erläutert, kann dies etwa durch die geeignete Strukturierung eines Halbleitersubstrates erfolgen. Im Unterschied zu den bisherigen Ausführungsbeispielen sind zur Erzeugung des Referenzimpulssignales REF und der phasenversetzten Inkrementalsignale INC₀, INC₉₀ nicht nur aktive Detektorbereiche D600 - D631 vorgesehen, die allesamt identisch ausgebildet sind. Vielmehr weisen die vier Referenzimpulssignal-Detektorbereiche D612, D617, D626 und D627, die zur Erzeugung des Referenzimpulssignales REF herangezogen werden, eine abweichende Form von den identischen, restlichen Inkrementalsignal-Detektorberelchen D600 - D611, D613 - D616, D618 - D625, D628 - D631 auf, welche zur Erzeugung der Inkrementalsignale INC₀, INC₉₀ dienen. Die Form der der Referenzimpulssignal-Detektorbereiche D612, D617, D626 und D627 wurde hierbei dergestalt gewählt, daß darüber eine optische Filterung der auf das Referenzimpulssignal REF aufmodulierten Signalanteiles mit der Periode der Inkrementalsignale INC₀, INC₉₀ resultiert. Wie bereits in der parallelen Anmeldung DE 197 34 136.5 der Anmelderin beschrieben, sind senkrecht zur Meßrichtung x einzelne Teilbereiche der der Referenzimpulssignal-Detektorbereiche D612, D617, D626 und D627 um eine halbe Teilungsperiode der abgetasteten Maßstabteilung versetzt zueinander angeordnet. Bei einer derartigen Ausbildung der der Referenzimpulssignal-Detektorbereiche D612, D617, D626 und D627 resultiert die gewünschte Filterung bzw. eine Auslöschung der gegenphasig modulierten Inkrementalsignalanteile am Referenzimpulssignal REF.
Grundsätzlich können selbstverständlich auch andere geometrische Formen der Referenzimpulssignal-Detektorbereiche gewählt werden, um die gewünschte Filterwirkung zu erzielen.

Zur Erzeugung des Referenzimpulssignales REF werden in dieser Ausführungsform die Ausgangssignale der Referenzimpulssignal-Detektorbereiche D612, D617, D626 und D627 einem ersten Eingang eines Differenzbildungselementes DIF603 zugeführt. Am zweiten Eingang des Differenzbildungselementes DIF603 liegt ein Signal an, das aus der Aufsummation der Ausgangssignale aller Inkrementalsignal-Detektorbereiche D600 - D611, D613 - D616, D618 - D625, D628 - D631 über das Summierelement SUM resultiert.

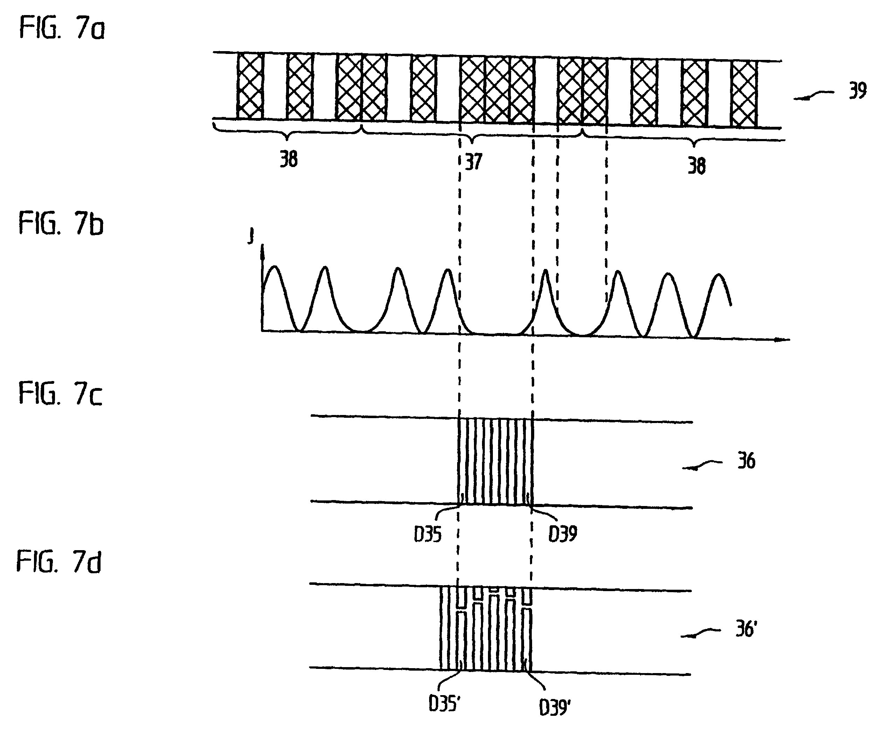

Die phasenversetzten Inkrementalsignale INC₀, INC₉₀ werden grundsätzlich analog zu den vorhergehenden Ausführungsbeispielen erzeugt. So ist jeweils vorgesehen, die phasengleichen Ausgangssignale der Inkrementalsignal-Detektorbereiche zusammenzuschalten und in der bekannten Art und Weise zwei Differenzbildungselementen DIF601 und DIF602 zuzuführen. Am Ausgang der beiden Differenzbildungselemente DIF601 und DIF602 liegen dann wiederum die beiden phasenversetzten Inkrementalsignale INC₀, INC₉₀ zur Weiterverarbeitung an.
Weitere Möglichkeiten zur vorteilhaften Ausgestaltung bzw. Abwandlung der erfindungsgemäßen Positionsmeßeinrichtung seien nachfolgend mit Hilfe der Figuren 7a - 7d erläutert.
Hierdurch soll zunächst deutlich gemacht werden, daß es im Rahmen der vorliegenden Erfindung keineswegs zwingend ist, innerhalb Referenzimpulssignal-Detektorbereiche stets Vierergruppen aktiver Detektorbereiche zur Erzeugung eines Referenzimpulssignales heranzuziehen, wobei die räumliche Lage in der strukturierten Detektoranordnung eine Korrelation mit der abzutastenden Struktur des Referenzmarkierungsfeldes aufweist.
Wenn beispielsweise auf der Seite des in Figur 7a gezeigten Maßstabes 32 eine aperiodische Struktur des Referenzmarkierungsfeldes 37 mit durchlässigen und undurchlässigen Teilbereichen in der Inkrementalteilungsspur 39 gewählt wird, so resultiert auch im Schattenwurf-Betrieb eines derartigen Systems eine Intensitätsverteilung an der Referenzposition in der Detektorebene, wie dies in Figur 7b gezeigt ist. Ursache hierfür sind unvermeidbare Beugungseffekte.
Um eine derartige Struktur des Referenzmarkierungsfeldes 37 bzw. das resultierende Intensitätsmuster in der Detektorebene optimal optisch abzutasten, können numehr beispielsweise auch mehr als vier phasenrichtig verschaltete, aktive Detektorbereiche einer strukturierten Detektoranordnung herangezogen werden. In Figur 7c ist dies etwa mit fünf aktiven Detektorbereichen D35 - D39 einer Detektoranordnung 36 gezeigt, die entsprechend phasenrichtig verschaltet zur Erzeugung des gewünschten Referenzimpulssignales herangezogen werden. Die oben erwähnte Filterung des unerwünschten Inkrementalsignalanteiles am Referenzimpulssignal kann wiederum sichergestellt werden, wenn pro Phasenlage jeweils gleich viele Detektorbereiche miteinander verschaltet werden.

Je nach gewählter Struktur des Referenzmarkierungsfeldes und hieraus resultierender Intensitätsverteilung in der Detektorebene bei der Referenzposition ist es demzufolge möglich, die Zahl aktiver Referenzimpulssignal-Detektorbereiche geeignet zu wählen, die phasenrichtig verschaltet zur Erzeugung des Referenzimpulssignales dienen.

Desweiteren soll anhand der Figur 7d veranschaulicht werden, daß es desweiteren im Rahmen der vorliegenden Erfindung möglich ist, die aktiven Referenzimpulssignal-Detektorbereiche D35' - D39'. welche primär zur Erzeugung des Referenzimpulssignales herangezogen werden, nicht über die vollständige Breite der Inkrementalteilungsspur zu nutzen, sondern lediglich einen Teilbereich der aktiven Detektorbereiche D35' - D39' zur Erzeugung der Abtastsignale heranzuziehen. Hierzu können die zur Erzeugung des Referenzimpulssignales gewählten aktiven Detektorbereiche etwa unterschiedliche Längen aufweisen, wie dies z.B. in Figur 7d bei den Detektorbereichen D35' - D39' angedeutet ist. Alternativ zu einer derartigen Variante könnten zu diesem Zweck Signalanteile aus identischen aktiven Detektorbereichen auch unterschiedlich verstärkt werden.
Auf diese Art und Weise läßt sich etwa im Fall einer divergenten Beleuchtung eine nochmals optimierte Korrelation zwischen den aperiodischen Strukturen des Referenzmarkierungsfeldes auf dem Maßstab und den ebenfalls aperiodisch verteilten, aktiven Detektorbereichen zur Erzeugung des Referenzimpulssignales erreichen bzw. einstellen.

Im Rahmen der letztgenannten Maßnahmen ist es desweiteren möglich, innerhalb einer strukturierten Detektoranordnung eine bestimmte Anzahl gleich langer aktiver Detektorbereiche vorzusehen; bestimmte aktive Detektorbereiche, die z.B. primär zur Erzeugung des Referenzimpulssignales herangezogen werden, sind jedoch in Längsrichtung in zwei Teilbereiche unterteilt. Während ein Teilbereich eines derart aufgeteilten aktiven Detektorbereiches hierbei erfindungsgemäß zur Erzeugung des Referenzimpulssignales als auch zur Erzeugung mindestens eines Inkrementalsignales dient, kann der zweite Teilbereich beispielsweise primär zur Erzeugung eines Inkrementalsignales herangzogen werden etc..

Desweiteren kann auch vorgesehen werden, die aktiven Detektorbereiche nicht rechteckförmig auszubilden, sondern beispielsweise Detektorbereiche vorzusehen, deren Berandung in Meßrichtung sinusförmig ausgebildet ist.

Auch können die Signale aus Detektorbereichen mit unterschiedlichen Phasenlagen, die zur Referenzimpulssignal-Erzeugung eingesetzt werden, unterscheildich verstärkt werden, um derart eine Optimierung der Breite des Referenzimpulssignales vorzunehmen.

Ebenso können einzelne oder auch alle Detektorbereiche in unregelmäßigen Abständen angeordnet sein. Derart läßt sich etwa der Oberwellengehalt der Inkrmentalsiganle reduzieren oder aber die oben erwähnte Filterwirkung erreichen.

Daneben kann selbstverständlich das in die Inkrementalspur integrierte Referenzmarkierungsfeld auch statt einer Umwandlung von Hellfeldern in Dunkelfelder durch die Umwandlung von Dunkelfeldern in Hellfelder entstehen.

Darüberhinaus ist es möglich, die Komponenten der Verschaltungselektronik oder zumindest einen Teil hiervon auf einem Detektorchip zu integrieren.

## Patentansprüche

1. Optische Positionsmeßeinrichtung, bestehend aus einem Maßstab (2) und einer relativ dazu beweglichen Abtasteinheit (1), die im Fall der Relativbewegung mindestens ein periodisches Inkrementalsignal (INC₀, INC₉₀) sowie mindestens ein Referenzimpulssignal (REF) bei einer definierten Referenzposition (x_{Ref}) des Maßstabes (2) und der Abtasteinheit (1) liefert, wobei
- auf dem Maßstab (2) an der Referenzposition (x_{Ref}) ein Referenzmarkierungsfeld (7; 70; 37) in eine Inkrementalteilungsspur (9; 90; 39) integriert angeordnet ist und
- die Abtasteinheit (1) eine Detektoranordnung (6; 60; 406; 506; 606; 36) umfaßt, die in Meßrichtung (x) mindestens drei benachbart angeordnete Detektorbereiche (D1 - D44; D100 - D107; D401 - D428; D501 - DD548; D606 - D631; D35 - D39; D35', D39') aufweist,
- von denen zwei der Detektorbereiche als Referenzimpulssignal-Detektorbereiche (D100, D101, D106, D107; D13 - D16, D21 - D24, D33 - D36, D37 - D40; D409, D410, D413, D414, D421, D422; D517, D518, D525, D526, D537, D538, D541, D542; D612, D617, D626, D627; D35 - D39, D35' - D39') zur Erzeugung des Referenzimpulssignales (REF) dienen, wobei die Relativanordnung der Referenzimpulssignal-Detektorbereiche (D100, D101, D106, D107; D13 - D16, D21 - D24, D33 - D36, D37 - D40; D409, D410, D413, D414, D421, D422; D517, D518, D525, D526, D537, D538, D541, D542; D612, D617, D626, D627; D35 - D39, D35' - D39') in Meßrichtung (x) in Abhängigkeit von der Strukturierung des Referenzmarkierungsfeldes (7; 70; 37) auf dem Maßstab (2; 32) gewählt ist und
- ein zwischen den beiden Referenzimpulssignal-Detektorbereichen (D100, D101, D106, D107; D13 - D16, D21 - D24, D33 - D36, D37 - D40; D409, D410, D413, D414, D421, D422; D517, D518, D525, D526, D537, D538, D541, D542; D612, D617, D626, D627; D35 - D39, D35' - D39') angeordneter Inkrementalsignal-Detektorbereich (D102 - D105; D17 - D20, D25 - D32; D113- D116, D118 - D125; D401 - D408, D411, D412, D415 - D420, D423 - D428; D501 - D516, D519 - D524, D527 - D536, D539, D540, D543 - D548; D600 - D611, D613 - D616, D618 - D625, D628 - D631) zur Erzeugung des Inkrementalsignales (INC₀, INC₉₀) dient,
**dadurch gekennzeichnet, daß**
eine Signalaufbereitung der über die Referenzimpulssignal-Detektorbereiche und den mindestens einen Inkrementalsignal-Detektorbereich erzeugten Signale derart erfolgt, daß das mindestens eine Inkrementalsignal (INC₀, INC₉₀) und das Referenzimpulssignal (REF) getrennt voneinander vorliegen, wobei auch im räumlichen Bereich der Referenzposition (x_{Ref}) das Inkrementalsignal (INC₀, INC₉₀) erzeugbar ist.

2. Optische Positionsmeßeinrichtung nach Anspruch 1, **dadurch gekennzeichnet, daß** die Detektoranordnung (6) mit den verschiedenen Detektorbereichen (D1 - D44) als strukturierte Detektoranordnung ausgebildet ist, die mehrere strahlungsempfindliche Detektorbereiche (D1 - D44) auf einem gemeinsamen Halbleitersubstrat umfaßt.

3. Optische Positionsmeßeinrichtung nach Anspruch 2, **dadurch gekennzeichnet, daß** die strukturierte Detektoranordnung mehrere strahlungsempfindliche Detektorbereiche (D1 - D44) identischer Form aufweist, die in Meßrichtung (x) benachbart zueinander angeordnet sind.

4. Optische Positionsmeßeinrichtung nach Anspruch 1, **dadurch gekennzeichnet, daß** der Inkrementalsignal-Detektorbereich (D17 - D20, D25 - D32) aus mehreren benachbart zueinander angeordneten einzelnen Detektorbereichen (D17 - D20, D25 - D32) besteht, die Ausgangssignale mit unterschiedlicher Phasenlage liefern.

5. Optische Positionsmeßeinrichtung nach Anspruch 1, **dadurch gekennzeichnet, daß** die Referenzimpulssignal-Detektorbereiche (D13 - D16, D21 - D24, D33 - D36, D37 - D40) aus mehreren benachbart zueinander angeordneten einzelnen Detektorbereichen (D13 - D16, D21 - D24, D33 - D36, D37 - D40) bestehen, die Ausgangssignale mit unterschiedlicher Phasenlage liefern.

6. Optische Positionsmeßeinrichtung nach mindestens einem der vorangehenden Ansprüche, **dadurch gekennzeichnet, daß** ein Differenzbildungselement (DIF30; DIF3; DIF403; DIF503; DIF603) vorgesehen ist, an dessen einem Eingang die Ausgangssignale der Referenzimpulssignal-Detektorbereiche (D100, D101, D106, D107; D13 - D16, D21 - D24, D33 - D36, D37 - D40; D409, D410, D413, D414, D421, D422; D517, D518, D525, D526, D537, D538, D541, D542; D612, D617, D626, D627) anliegen, während am anderen Eingang des Differenzbildungselementes (DIF30; DIF3; DIF403; DIF503; DIF603) ein Referenzsignal anliegt.

7. Optische Positionsmeßeinrichtung nach Anspruch 4 und 5, **dadurch gekennzeichnet, daß** die verschiedenen Detektorbereiche (D1 - D44; D100 - D107; D401 - D428; D501 - DD548; D606 - D631; D35 - D39; D35', D39') derart verschaltet sind, daß eine Filterung des periodischen Inkrementalsignalanteiles am Referenzimpulssignal (REF) resultiert.

8. Optische Positionsmeßeinrichtung nach Anspruch 6 und 7, **dadurch gekennzeichnet, daß** jeder Referenzimpulssignal-Detektorbereich (D13 - D16, D21 - D24, D33 - D36, D37 - D40) vier benachbarte Detektorbereiche umfaßt, die um 90° phasenverschobene Ausgangssignale liefern und diejenigen Detektorbereiche aller Referenzimpulssignal-Detektorbereiche (D13 - D16, D21 - D24, D33 - D36, D37 - D40) miteinander verbunden sind, die phasengleiche Ausgangsignale liefern, wobei die phasengleichen Ausgangssignale einem Summierelement (SUM6) zugeführt werden, dessen Ausgangssignal als Referenzsignal wiederum am Eingang des Differenzbildungselementes (DIF3) anliegt.

9. Optische Positionsmeßeinrichtung nach Anspruch 7, **dadurch gekennzeichnet, daß** aus der Kombination verschiedener, erzeugter Referenzimpulssignalanteile (RT, RGT) ein Referenzimpulssignal (REF) resultiert, aus dem der periodische Inkrementalsignalanteil eliminiert ist.

10. Optische Positionsmeßeinrichtung nach Anspruch 9, **dadurch gekennzeichnet, daß** das Referenzsignal (RGT) am Eingang des Differenzbildungselementes (DIF403) aus aufsummierten Inkrementalsignalanteilen gebildet ist, die von den Inkrementalsignal-Detektorbereichen (D401 - D408, D411, D412, D415 - D420, D423 - D428) erzeugbar sind.

11. Optische Positionsmeßeinrichtung nach Anspruch 9, **dadurch gekennzeichnet, daß** die Amplituden der von den verschiedenen Inkremental- und Referenzimpulssignal-Detektorbereichen (D501 - D548) gelieferten Signalen mittels Verstärkerelementen (AMP1 - AMP7) definiert einstellbar sind.

12. Optische Positionsmeßeinrichtung nach Anspruch 1, **dadurch gekennzeichnet, daß** zumindest ein Teil der Detektorbereiche sowohl zur Erzeugung eines Referenzimpulssignales als auch zur Erzeugung eines Inkrementalsignales dient.

## Claims

1. An optical position measuring device, consisting of a measuring scale (2) and a sensing unit (1) movable relative thereto, which provides at least one periodic incremental signal (INC₀, INC₉₀) and at least one reference pulse signal (REF) at a defined reference position (x_{Ref}) of the measuring scale (2) and the sensing unit on the occurrence of the relative movement, wherein
- a reference marker signal field (7; 70; 37) is arranged on the measuring scale (2) at the reference position (x_{Ref}), integrated in an incremental graduation track (9, 90; 39) and
- the sensing unit (1) comprises a detector arrangement (6; 60; 406; 506; 606; 36) which has at least three adjacently arranged detector regions (D1 - D44; D100 - D107; D401 - D428; D501 - DD548; D606 - D631; D35 - D39, D35', D39'),
- of which two of the detector regions serve as reference pulse signal detector regions (DI00, DI0I, D106, D107; D13 - DI6, D21 - D24, D33 - D36, D37 - D40; D409, D410, D413, D414, D421, D422, D517, D518, D525, D526, D537, D538, D541, D542; D612, D617, D626, D627; D35 - D39, D35' - D39') for generation of the reference pulse signal (REF), wherein the relative arrangement of the reference pulse signal detector regions (DI00, DI0I, D106, D107; D13 - DI6, D21 - D24, D33 - D36, D37 - D40; D409, D410, D413, D414, D421, D422, D517, D518, D525, D526, D537, D538, D541, D542; D612, D617, D626, D627; D35 - D39, D35' - D39') in the measuring direction (x) is selected in dependence on the structuring of the reference mark field (7; 70; 37) on the measuring scale (2; 32) and
- and an incremental signal detector region (D102 - D105; D17- D20, D25 - D32; D113 - D116, D118 - D125; D401 - D408, D411, D412, D415 - D420, D423 - D428; D501 - D516, D519 - D524, D527 - D536, D539, D540, D543 - D548; D600 - D61 1, D613 - D616, D618 - D625, D628 - D631) arranged between the two reference pulse signal detector regions (DI00, DI0I, D106, D107; D13 - DI6, D21 - D24, D33 - D36, D37 - D40; D409, D410, D413, D414, D421, D422, D517, D518, D525, D526, D537, D538, D541, D542; D612, D617, D626, D627; D35 - D39, D35' - D39') serves to generate the incremental signal (INC₀, INC₉₀),
**characterized in that**
signal processing of the signals generated by the reference pulse signal detector regions and the at least one incremental signal detector region is so effected that the at least one incremental signal (INC₀, INC₉₀) and the reference pulse signal (REF) are present separated from one another, whereby the incremental signal (INC₀, INC₉₀) can be generated even in the spatial region of the reference position (x_{Ref}).

2. An optical position measuring device according to claim 1, **characterized in that** the detector arrangement (6) with different detector regions (D1 - D44) is formed as a structured detector arrangement, which comprises a plurality of detector regions (D1 - D44) sensitive to radiation on a common semiconductor substrate.

3. An optical position measuring device according to claim 2, **characterized in that** the structured detector arrangement has a plurality of detector regions (D1 - D44) sensitive to radiation of identical form, which are arranged next to each other in the measuring direction (x).

4. An optical position measuring device according to claim 1, **characterized in that** the incremental detector region (D17 - D20, D25 - D32) consists of a plurality of individual detector regions (D17 - D20, D25 - D32) arranged next to each other, which supply output signals with different phase positions.

5. An optical position measuring device according to claim 1, **characterized in that** the reference pulse signal detector regions (D13 - DI6, D21 - D24, D33 - D36, D37 - D40) consist of a plurality of individual detector regions (D13 - DI6, 021 - D24, D33 - D36, D37 - D40) arranged next to each other, which supply output signals with different phase positions.

6. An optical position measuring device according to at least one of the preceding claims, **characterized in that** a difference forming element (D1F30; DIF3; D1F403; D1F503; D1F603) is provided, on whose one input are present the output signals of the reference pulse signal detector regions (DI00, DI0I, D106, D107; D13 - D16, D21 - D24, D33 - D36, D37 - D40; D409, D410, 0413, D414, D421,D422; D517, D518, D525, D526, D537, D538, D541, D542; D612, D617, D626, D627) while a reference signal is present on the other input of the difference forming element (D1F30; DIF3; D1F403; D1F503; D1F603).

7. An optical position measuring device according to claim 4 or 5, **characterized in that** the different detector regions (D1 - D44; D100 - D107; D401 - D428; D501 - DD548; D606 - D631; D35 - D39; D35', ID39') are so interleaved that filtering of the periodic incremental signal component on the reference pulse signal (REF) results.

8. An optical position measuring device according to claim 6 or 7, **characterized in that** each reference pulse signal detector region (D13 - D16, D21 - D24, D33 - D36, D37 - D40) comprises four adjacent detector regions, which supply output signals phase displaced by 90° and those detector regions of all reference pulse signal detector regions (D13 - D16, D21 - D24, D33 - D36, D37 - D40) which supply output signals of like phase are connected together, wherein the output signals of like phase are fed to a summing element (SUM6), whose output signal is in turn applied to the input of the difference element (DIF3) as reference signal.

9. An optical position measuring device according to claim 7, **characterized in that** a reference pulse signal (REF) from which the periodic incremental signal component is eliminated results from the combination of different generated reference pulse signal components (RT, RGT).

10. An optical position measuring device according to claim 9, **characterized in that** the reference signal (RGT) on the input of the difference forming element (DIF403) is formed from summed incremental components which can be generated from the incremental signal detector regions (D401 - D408, D411, D412, D415 - D420, D423 - D428).

11. An optical position measuring device according to claim 9, **characterized in that** the amplitudes of the signals supplied by the different incremental and reference pulse signal detector regions (D501 - D548) can be adjusted in a defined manner by means of amplifying elements (AMP1 - AMP7).

12. An optical position measuring device according to claim 1, **characterized in that** at least a part of the detector regions serves both for generating a reference pulse signal and also for generating an incremental signal.

## Revendications

1. Dispositif optique de mesure de position, comprenant une règle graduée (2) et une unité de palpage (1) mobile par rapport à celle-ci, qui, lors d'un déplacement relatif, produit au moins un signal incrémental (INC₀, INC₉₀) ainsi qu'au moins un signal d'impulsion de référence (REF) pour une position de référence (x_{Ref}) définie de la règle graduée (2) et de l'unité de palpage (1),
un champ de repère de référence (7 ; 30 ; 37) étant intégré dans une piste de graduations incrémentales (9 ; 90 ; 39) sur la règle graduée (2), au niveau de la position de référence (x_{Ref}),
l'unité de palpage (1) comportant un agencement de détecteurs (6 ; 60 ; 406 ; 506 ; 606 ; 36) qui présente, dans la direction de mesure (x), au moins trois zones de détecteurs voisines (D1-D44 ; D10-D107 ; D401-D428 ; D501-D548 ; D606-D631 ; D35-D39 ; D35'-D39'),
parmi lesquelles deux zones de détecteurs servent de détecteurs d'impulsion de référence (D100, D101, D106, D107 ; D13-D16, D21-D24, D33-D36, D37-D40 ; D409, D410; D413, D414, D421, D422 ; D517, D518, D525, D526, D537, D538, D541, D542 ; D612, D617,D626 ; D627, D35-D39, D35'-D39') pour produire le signal d'impulsion de référence (REF), la disposition relative des zones formant détecteurs d'impulsion de référence (D100, D101, D106, D107 ; D13-D16, D21-D24, D33-D36, D37-D40 ; D409, D410. D413, D414, D421, D422 ; D517, D518, D525, D526, D537, D538, D541, D542 ; D612, D617,D626 ; D627, D35-D39, D35'-D39'), dans la direction de mesure (x), étant choisie en fonction de la structuration du champ de repères de référencé (7 ; 70 ; 37) sur la règle (2 ; 32),
une zone formant détecteur de signal incrémental (D102, D105, D17-D20, D25-D32 ; D113-D116, D118-D125 ; D401-D408, D411, D412, D415-D420, D423-D428 ; D501-D516, D519-D524, D527-D536, D539, D540, D543-D548 ; D600-D611, D613-D616 ; D618-D625, D628-D631) disposée entre les deux zones formant détecteurs d'impulsion de référence (D100, D101, D106, D107 ; D13-D16, D21-D24, D33-D36, D37-D40 ; D409, D410, D413, D414, D421, D422 ; D517, D518, D525, D526, D537, D538, D541, D542 ; D612, D617,D626 ; D627, D35-D39,D35'-D39') servant à produire le signal incrémental (INC₀, INC₉₀),
**caractérisé en ce**
**qu'**un traitement des signaux produits par l'intermédiaire des zones formant détecteurs d'impulsion de référence et de la zone formant détecteur de signal incrémental, au nombre d'au moins une, a lieu de telle sorte que le signal incrémental (INC₀, INC₉₀), au nombre d'au moins un, et le signal d'impulsion de référence (REF) soient distincts l'un de l'autre, le signal incrémental (INC₀, INC₉₀) pouvant être produit également dans la région spatiale du repère de référence (x_{Ref}).

2. Dispositif optique de mesure de position selon la revendication 1, **caractérisé en ce que** l'agencement de détecteurs (6) avec les différentes zones formant détecteurs (D1-D44) est conformé en agencement structuré de détecteurs, qui comprend plusieurs zones formant détecteurs (D1-D44) sensibles au rayonnement sur un substrat semi-conducteur commun.

3. Dispositif optique de mesure de position selon la revendication 2, **caractérisé en ce que** l'agencement structuré de détecteurs comporte plusieurs zones formant détecteurs (D1-D44) sensibles au rayonnement, de forme identique, qui sont disposées dans le voisinage les unes des autres dans la direction de mesure.

4. Dispositif optique de mesure de position selon la revendication 1, **caractérisé en ce que** la zone formant détecteur de signal incrémental (D17-D20, D25-D32) comprend plusieurs zones de détecteurs individuelles (D17-D20, D25-D32), disposées dans le voisinage les unes des autres, qui délivrent des signaux de sortie avec un phasage différent.

5. Dispositif optique de mesure de position selon la revendication 1, **caractérisé en ce que** les zones formant détecteurs d'impulsions (D13-D16, D21-D24, D33-D36, D37-D40) comprennent plusieurs zones de détecteurs individuelles (D13-D16, D21-D24, D33-D36, D37-D40) disposées dans le voisinage les unes des autres qui délivrent des signaux de sortie avec un phasage différent.

6. Dispositif optique de mesure de position selon au moins une des revendications précédentes, **caractérisé en ce qu'**il est prévu un élément de formation de la différence (DIF30 ; DIF 3 ; DIF 403 ; DIF 503 ; DIF 603) à l'une des entrées duquel sont appliqués les signaux de sortie des zones de détecteurs d'impulsions de référence (D100, D101, D106, D107 ; D13-D16, D21-D24, D33-D36, D37-D40 ; D409, D410, D413, D414, D421, D422 ; D517, D518, D525, D526, D537, D538, D541, D542 ; D612, D617,D626 ; D627), tandis qu'à l'autre entrée de l'élément de formation de la différence (DIF 30 ; DIF 3 ; DIF 503 ; DIF 603) est appliqué un signal de référence.

7. Dispositif optique de mesure de position selon les revendications 6 et 7, **caractérisé en ce que** les différentes zones de détecteurs (D1-D4 ; D100-D107 ; D401-D428 ; D501-548 ; D606-D631 ; D35-D39 ; D35', D39') sont connectées de manière telle qu'il en résulte un filtrage de la fraction de signal incrémentale dans le signal d'impulsion de référence (REF).

8. Dispositif optique de mesure de position selon les revendications 6 et 7, **caractérisé en ce que** chaque zone de détecteurs d'impulsions de référence (D13-D16 ; D21-D24 ; D33-D36 ; D37-40) comprend quatre zones de détecteurs voisines qui délivrent des signaux de sortie déphasés de 90° et **en ce que** les zones de détecteurs de toutes les zones de détecteurs d'impulsions de référence (D13-D16 ; D21-D24 ; D33-D36 ; D37-40) qui délivrent des signaux de sortie de même phase sont reliées entre elles, les signaux de sortie de même phase étant transmis à un élément de sommation (SUM6), dont le signal de sortie est à son tour appliqué en tant que signal de référence à l'entrée de l'élément de formation de la différence (DIF3).

9. Dispositif optique de mesure de position selon la revendication 7, **caractérisé en ce qu'**il résulte de la combinaison de différentes fractions d'impulsions de référence (RT, RGT) produites, un signal d'impulsion de référence (REF), dans lequel la fraction périodique de signal incrémental est éliminée.

10. Dispositif optique de mesure de position selon la revendication 9, **caractérisé en ce que** le signal de référence (RGT) à l'entrée de l'élément de formation de la différence (DIF403) est formé de fractions cumulées de signaux incrémentaux qui peuvent être produits par les zones de détecteurs de signal incrémental (D401-D408 ; D411, D415-D420, D423-D428).

11. Dispositif optique de mesure de position selon la revendication 9, **caractérisé en ce que** les amplitudes des signaux fournis par les différentes zones de détecteurs de signal incrémental et d'impulsion (D501-D548) peuvent être réglées de manière ciblée à l'aide d'éléments amplificateurs (AMP1-AMP7).

12. Dispositif optique de mesure de position selon la revendication 1, **caractérisé en ce qu'**au moins une partie des zones de détecteurs servent aussi bien à produire un signal d'impulsion de référence, qu'à produire un signal incrémental.
